(19) **Europäisches Patentamt**
**European Patent Office**
**Office européen des brevets**

(11) **EP 2 931 402 B1**

(12) **EUROPEAN PATENT SPECIFICATION**

(45) Date of publication and mention
of the grant of the patent:
**09.08.2017 Bulletin 2017/32**

(51) Int Cl.:
***B01D 46/52*** *(2006.01)*    ***B01D 39/08*** *(2006.01)*
***B01D 53/02*** *(2006.01)*    ***B01D 39/16*** *(2006.01)*

(21) Application number: **12889940.8**

(22) Date of filing: **14.12.2012**

(86) International application number:
**PCT/US2012/069665**

(87) International publication number:
**WO 2014/092718 (19.06.2014 Gazette 2014/25)**

(54) **NON-WOVEN ELECTRET FIBROUS WEBS AND METHODS OF MAKING SAME**

NICHTGEWEBTE ELEKTRET-FASERBAHNEN UND VERFAHREN ZUR HERSTELLUNG DAVON

NAPPES FIBREUSES NON TISSÉES EN ÉLECTRET ET LEURS PROCÉDÉS DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2015 Bulletin 2015/43**

(73) Proprietor: **3M Innovative Properties Company**
**St. Paul, MN 55133-3427 (US)**

(72) Inventors:
• **BOTH, Hendrik**
**NL-4815 Breda (NL)**

• **FOX, Andrew R.**
**Saint Paul, Minnesota 55133-3427 (US)**
• **LE NORMAND, Jean**
**F-95006 Cergy Pontoise Cedex (FR)**

(74) Representative: **De Clercq & Partners**
**Edgard Gevaertdreef 10a**
**9830 Sint-Martens-Latem (BE)**

(56) References cited:
**WO-A2-2012/006338**    **US-A1- 2006 005 517**
**US-A1- 2009 253 323**    **US-A1- 2010 159 770**
**US-B1- 6 858 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present disclosure relates to pleated non-woven electret fibrous webs, such as those of WO 2012/00638 A2, useful as air filtering materials; for example, as air filters for heating, ventilation and cooling (HVAC) devices; cabin air filters for vehicles; room air purifiers; respirators; and the like. The present disclosure also relates to methods of making such filter webs.

### Background

Air quality is crucial to life, and many companies are researching filtration materials for removing airborne contaminants, such as particulates and volatile organic compounds (VOC), with high efficiency and low air-flow resistance.

### Summary

Disclosed herein are pleated, non-woven electret fibrous webs comprising a random, intermingled mixture of discrete electret fibers, discrete multicomponent bonding fibers, and sorbent particles, wherein the pleated, non-woven electret fibrous web comprises at least one pleat-stabilizing member that is arranged on a downstream or upstream side of the pleated air filter and that extends across multiple pleat tips of the pleated air filter, and wherein the pleated, non-woven electret fibrous web is a calendered web that comprises a solidity of from 20 % to 28 %. These and other aspects of the invention will be apparent from the detailed description below.

### Brief Description of the Drawings

Figure 1 is a schematic view illustrating an arranging manner of the fibers in a non-woven electret fibrous web according to exemplary embodiments of the disclosure.
Figure 2 is a schematic view wherein some of the particulate substance adhered to the surfaces of the fibers and the others are captured by the web-shaped structure composed of the fibers after the particulate substance entered the non-woven electret fibrous web according to exemplary embodiments of the disclosure.
Figure 3 is a cross-sectional SEM microphotograph, at 100X, of an exemplary non-woven electret fibrous web.
Figure 4 is a perspective view of an exemplary pleated filter comprising an exemplary pleat-stabilizing member.
Figure 5 is a perspective view of an exemplary framed pleated filter comprising another exemplary pleat-stabilizing member.
Figure 6 is a perspective view in partial cutaway of another exemplary framed pleated filter comprising another exemplary pleat-stabilizing member.
Figure 7 is a perspective view in partial cutaway of another exemplary framed pleated filter comprising another exemplary pleat-stabilizing member.
Figure 8 is a perspective view in partial cutaway of another exemplary framed pleated filter comprising another exemplary pleat-stabilizing member.

Like reference numbers in the various figures indicate like elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

### Detailed Description

An "Electret" (e.g. an electret (e.g. split-film electrostatic) fiber, or a non-woven electret fibrous web comprising electret fibers) is a stable dielectric material with a quasi-permanently embedded static electric charge (which, due to the high resistance of the material, will not decay for an extended time period of up to hundreds of years) and/or a quasi-permanently oriented dipole polarization.
"Hydrocharged" used with respect to a collection of fibers means that the fibers have been placed in intimate contact with a polar fluid (e.g., water, an alcohol, a ketone, or mixture of polar fluids) and then dried under conditions sufficient so that the fibers become charged.
By "pleated" is meant a web at least portions of which have been formed (e.g., folded) into a configuration comprising rows of generally parallel, oppositely oriented folds. As such, the pleating of a web as a whole is distinguished from e.g. the crimping of individual fibers.

"Non-woven fibrous web" means an article or sheet having a structure of individual fibers or fibers, which are interlaid, but not in an identifiable manner as in a knitted fabric. Non-woven fabrics or webs have been formed from many processes such as for example, meltblowing processes, air-laying processes, and bonded carded web processes.

"Cohesive non-woven electret fibrous web" means a fibrous web characterized by entanglement or bonding of the fibers sufficient to form a self-supporting web.

"Self-supporting" means a web having sufficient coherency and strength so as to be drapable and handleable without substantial tearing or rupture.

"Meltblown fibers" means fibers prepared by a meltblowing or meltblown process.

"Spun-bonding" and "spun bond process" mean a method for forming a non-woven electret fibrous web by extruding molten fiber-forming material as continuous or semi-continuous fibers from a plurality of fine capillaries of a spinneret, attenuating (i.e., drawing) the fibers, and thereafter collecting the attenuated fibers. An exemplary spun-bonding process is disclosed in, for example, U.S. Patent No. 3,802,817.

"Spun bond fibers" and "spun-bonded fibers" mean fibers made using spun-bonding or a spun bond process. Such fibers are generally continuous fibers and are entangled or point bonded sufficiently to form a cohesive non-woven electret fibrous web such that it is usually not possible to remove one complete spun bond fiber from a mass of such fibers.

"Autogenous bonding" means bonding between fibers at an elevated temperature (as obtained in an oven, a through-air bonder, or the like) without application of solid contact pressure such as in point-bonding or calendering.

"Calendering" as used herein means a process of passing a non-woven electret fibrous web through heated rollers with application of pressure to obtain a compressed and bonded fibrous non-woven web.

"(Co)polymeric" means a homopolymer or a copolymer.

"Mono-component thermoplastic fibers" means fibers, containing a single (co)polymeric component, which exhibit a softening or melting temperature at a defined temperature above 25°C.

"Multicomponent fibers" means fibers (e.g. bicomponent fibers) containing two or more (co)polymeric components, such that a portion of the fiber exhibits a softening or melting temperature at a defined temperature above 25°C, while the remaining portion of the fiber remains in a solid, unsoftened and unmelted state at that defined temperature.

"Porosity" means a measure of void volume in a material. Size, frequency, number, and/or interconnectivity of pores and voids contribute the porosity of a material.

"Void volume" means a percentage or fractional value for the unfilled space within a porous or fibrous body, such as a web or filter, which may be calculated by measuring the weight and volume of a web or filter, then comparing the weight to the theoretical weight of a solid mass of the same constituent material of that same volume.

"Solidity" means a dimensionless fraction (usually reported in percent) that represents the proportion of the total volume of a fibrous web that is occupied by the solid materials (e.g. fibers and particles) of the web.

Various exemplary embodiments of the disclosure will now be described with particular reference to the Drawings. Exemplary embodiments of the invention may take on various modifications and alterations without departing from the spirit and scope of the disclosure. Accordingly, it is to be understood that the embodiments of the invention are not to be limited to the following described exemplary embodiments, but is to be controlled by the limitations set forth in the claims and any equivalents thereof.

In one aspect, the disclosure describes a pleated, non-woven electret fibrous web useful for air filtration, including in a single layer, a plurality of electret fibers, a plurality of sorbent particles (preferably granulated activated carbon (GAC) particles), and a plurality of multicomponent (bonding) fibers. The non-woven electret fibrous web comprises a pleated structure to increase the overall surface area available for entrapment or adsorption of air contaminants. In many embodiments, the fibers and particles may be generally randomly and homogeneously mixed, intermingled, etc., throughout the thickness of the web. Or, in other embodiments, a gradient of composition across the thickness of the web may be present.

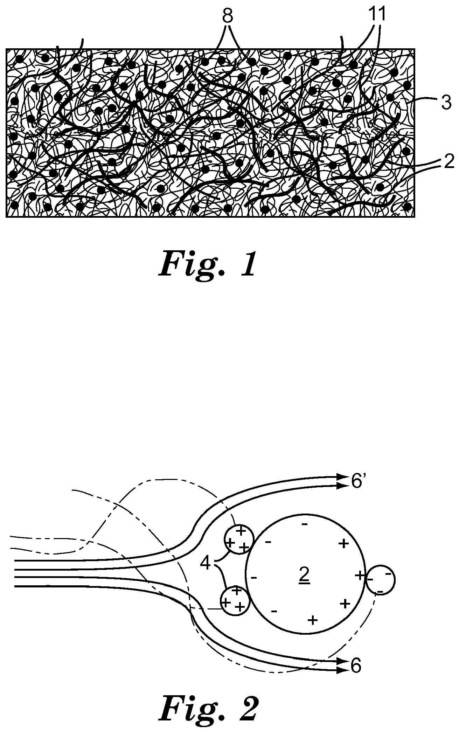

Fig. 1 is a schematic view illustrating an arrangement of fibers in a non-woven electret fibrous web according to an exemplary embodiment of the disclosure. As shown in Fig. 1, fibers 11 (e.g. multicomponent fibers) and fibers 2 (e.g. electret fibers) are randomly arranged in a single layer of the non-woven electret fibrous web 3. In addition, sorbent particles 8 are distributed, e.g. randomly distributed, throughout the single layer of the fibrous web.

Fig. 2 is a schematic magnified view of a portion of the non-woven electret fibrous web 3 of Fig. 1, showing that the web-shaped structure composed of the fibers captures at least a portion of airborne particulate substances in an air stream passed through the non-woven electret fibrous web 3, by physical entrapment and/or by charge attraction to electret fibers. As shown in Fig. 2, when the airborne particulate substance 4 enters the non-woven electret fibrous web 3, some of the particulate substances 4 may adhere to the surfaces of the electret fibers 2 due to electrostatic interaction with the electret fibers, and others may be physically captured by the fibrous network formed by the multicomponent fibers 11 and the electret fibers 2, as a gas (e.g. air) stream (6, 6') passes through the web 3.

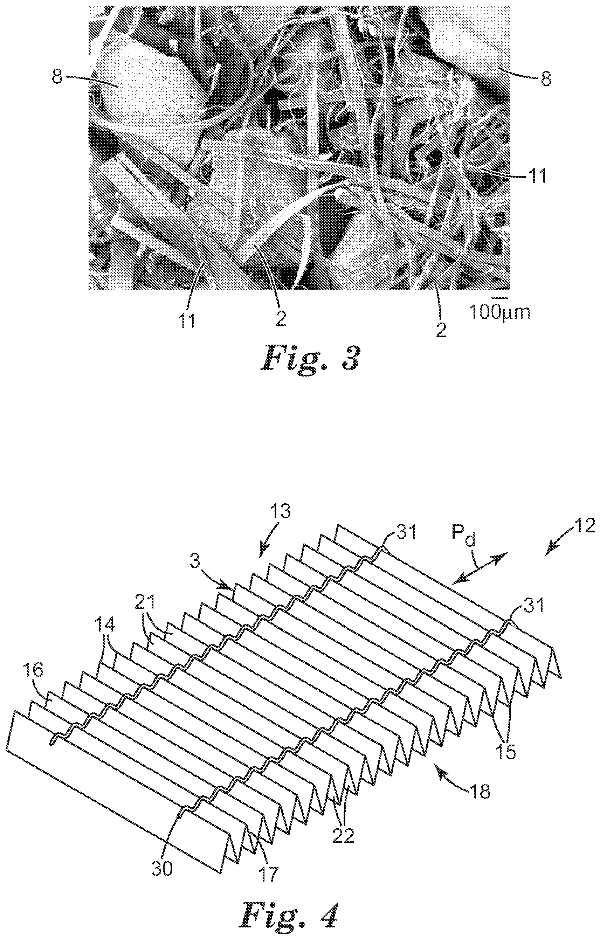

Fig. 3 shows a scanning electron microphotograph (cross-sectional view at 100X magnification) of an exemplary non-woven electret fibrous web 3 of the invention, comprising electret fibers 2, multicomponent fibers 11, and sorbent particles 8.

In some exemplary embodiments of the disclosure, the non-woven electret fibrous web may have a basis weight of 40 to 250 grams per square meter (gsm). In specific embodiments of this type, the non-woven electret fibrous web may have a basis weight of 80 to 150 grams per square meter (gsm). In other exemplary embodiments, the non-woven electret fibrous web may have a basis weight of at least about 80, 160, 240, 320, or 400 gsm. In further exemplary embodiments, the non-woven electret fibrous web may have a maximum basis weight of at most about 1000, 800, 600, or 400 gsm. (In calculating a basis weight for the non-woven electret fibrous web, the contribution of any supporting layer as described herein, may be excluded).

The non-woven electret fibrous webs of the present disclosure comprise at least discrete electret fibers and discrete multicomponent fibers. In the present context, by discrete is meant that the fibers have been cut (e.g., chopped) to a length of less than about 100 mm, e.g. to a predetermined (e.g., average) length of less than 100 mm. That is, while such fibers may have been originally produced (e.g., melt-spun) in much longer lengths, they have since been chopped to a discrete form. Such fibers that have been chopped to a predetermined length are often referred to as staple fibers.

The non-woven electret fibrous webs of the present disclosure comprise a multiplicity of randomly oriented discrete fibers comprising electret fibers. Potentially suitable electret fibers are described in U.S. Patent Nos. 4,215,682; 5,641,555; 5,643,507; 5,658,640; 5,658,641; 6,420,024; 6,645,618, 6,849,329; and 7,691,168. In exemplary embodiments of the disclosure, the electret fiber can be selected from a fiber prepared using a method for applying an electrostatic charge to uncharged fibers (i.e. an electrostatic applying technology), preferably (co)polymer fibers. Thus, suitable electret fibers may be produced by meltblowing fibers in an electric field, e.g. by melting a suitable dielectric material such as a polymer or wax that contains polar molecules, passing the molten material through a melt-blowing die to form discrete fibers, and then allowing the molten polymer to re-solidify while the discrete fibers are exposed to a powerful electrostatic field. Electret fibers may also be made by embedding excess charges into a highly insulating dielectric material such as a polymer or wax, e.g. by means of an electron beam, a corona discharge, injection from an electron, electric breakdown across a gap or a dielectric barrier, and the like.

Particularly suitable electret fibers are hydrocharged fibers. Hydrocharging of fibers may be carried out using a variety of techniques including impinging, soaking or condensing a polar fluid onto the fiber, followed by drying, so that the fiber becomes charged. Preferably water is employed as the polar hydrocharging liquid, and the media preferably is exposed to the polar hydrocharging liquid using jets of the liquid or a stream of liquid droplets provided by any suitable spray means. The electret fibers may be subjected to other charging techniques in addition to or alternatively to hydrocharging, including electrostatic charging, tribocharging, or plasma fluorination. Corona charging followed by hydrocharging and plasma fluorination followed by hydrocharging are particularly suitable charging techniques used in combination.

In some exemplary embodiments, the electret fibers can have a length of 10-100 mm and the cross section thereof may be circular, triangular, square, rectangular, other polygonal shape, or the like, or other cross-sectional shapes (i.e. cross-shaped, X-shaped, and the like) In one exemplary embodiment of the disclosure, the electret fibers can have a length of 38-90 mm. In other exemplary embodiments, the electret fibers may have a maximum length of about 20, about 10, about 6, about 4, or about 3 mm. In further embodiments, the electret fibers may have a minimum length of about 1, about 2, or about 3 mm. In various embodiments, the electret fibers may comprise an average size (e.g., diameter, or equivalent diameter in the case of fibers with a non-round or irregular cross-section) of at least about 1, 5, 10, or 20 microns. In further embodiments, the electret fibers may comprise an average size of at most about 100, 60, 40, or 20 microns. In some embodiments the electret fibers may be chopped staple fibers.

The electret fibers may be made of any suitable polymeric fiber-forming material that can attain and maintain satisfactory electret properties. In some embodiments, such materials may comprise semicrystalline polymeric resins having a volume resistivity of $10^{14}$ ohm-centimeters or greater at 22° C. In further embodiments, the volume resistivity may be about $10^{16}$ ohm-centimeters or greater. (Resistivity of the polymeric fiber-forming material may be measured e.g. according to ASTM D 257-93.) In specific embodiments, the polymeric fiber-forming material may be substantially free from components such as antistatic agents that could significantly increase electrical conductivity or otherwise interfere with the fiber's ability to accept and hold electrostatic charges. Some examples of polymers which may be suitable include polyolefins such as polyethylene, polypropylene, polybutylene, poly(4-methyl-1-pentene) and cyclic olefin copolymers, and combinations of such polymers. In specific embodiments, the electret fibers may be polypropylene homopolymer fibers.

In some embodiments, additives may be included in the polymeric material to enhance the ability of the polymeric material to attain and maintain satisfactory electret properties. Representative electret-charging enhancement additives include e.g. hindered amine-based additives, triazine-based additives, tristearyl melamine, and various additives available from Ciba Specialty Chemicals under the trade designations CHIMASSORB. Potentially suitable additives are described e.g. in U.S. Patent 6,969,484. The types and amounts of such additives will be familiar to those skilled in the art. For example, in various embodiments electret-charging enhancement additives may be present in an amount greater than 0.1 wt. % or greater than 0.5 wt. %, and less than about 5 wt. %, 3 wt. % or 2 wt. %.

The non-woven electret fibrous web comprises randomly oriented discrete multicomponent fibers having at least a first region and a second region, wherein the first region has a melting temperature lower than the second region. A variety of different types and configurations of multicomponent fibers exist. Suitable multicomponent fibers are described in, for example, U.S. Patent Nos. 7,695,660, 6,057,256, 5,486,410, 5,662,728, and 5,972,808. In certain exemplary embodiments, the multicomponent fibers are bicomponent fibers. One example of a suitable bicomponent fiber is a sheath/core fiber, where the sheath that surrounds the core forms the first region and the core forms the second region of the fiber. The first region may be comprised of such materials as e.g. copolyester or polyethylene. The second region may be comprised of such materials as e.g. polypropylene or polyester. Suitable bicomponent fibers are described in, for example, U.S. Patent No. 4,552,603.

During heating, the first region will (at least partially) melt, while the second region with a higher melting temperature may remain largely intact (e.g., unmelted or unsoftened). During melting, the first region may tend to collect at junction points where fibers contact one another. Then, upon cooling, the material of the first region will resolidify to secure the web together. Therefore, the material of the first regions of the multicomponent fibers may secure the fibers together to form the web (e.g., into a cohesive, self-supporting network). Such multicomponent fibers can thus be considered to be bonding fibers, and in many embodiments there may not be a need for a separate binder to be used, to form the non-woven electret fibrous web.

By using the process disclosed herein, it is possible to use the melted first region of the multicomponent fiber to secure sorbent particles to the multicomponent fibers, and therefore to the non-woven electret fibrous web. That is, in at least some embodiments the sorbent particles may be retained in the web generally, or completely, by the multicomponent bonding fibers, with no other added binder needing to be present. In general, the more multicomponent fiber used in the electret fibrous web, the higher may be the possible loading of the particles, as higher amounts of multicomponent fibers may function to secure the particles to the non-woven electret fibrous web. However, we have discovered that by maintaining the quantity of multicomponent fibers so that they comprise greater than 0% and less than 10% by wt. of the total weight of the non-woven electret fibrous web, in some such embodiments the particles may be adequately secured to the non-woven electret fibrous web, e.g. without occluding a substantial portion of the particle surface with melted material of the first region.

In some exemplary embodiments, the multicomponent fibers are comprised in the fibrous web in an amount of at least 10%, 20%, 30%, 40%, 50% or even 60% or more by weight of the total weight of the non-woven electret fibrous web; and, in further embodiments, the multicomponent fibers are comprised in the fibrous web in an amount of no more than 100%, 90%, 80%, 70% or even 60% by weight of the total weight of the non-woven electret fibrous web. In other embodiments, the multicomponent fibers are present in the fibrous web at a weight %, based on the total weight of the web including fibers and particles (but not including any support layers if present), of at least about 4, 6, or 8 weight %. In other embodiments, the multicomponent fibers are present in the fibrous web at a weight %, based on the total weight of the web including fibers and particles (but not including any support layers if present), of at most about 18, 16, 14, 12, or 10 weight %.

In various embodiments, the ratio by weight of the multicomponent fibers of the fibrous web, to the electret fibers of the fibrous web (again, not including any fibers of any support layer(s) that might be present), may be at least 1:4, 1:2, 3:4, or 1:1. In further embodiments, , the ratio by weight of the multicomponent fibers of the fibrous web, to the electret fibers of the fibrous web (again, not including any fibers of any support layer(s) that might be present), may be at most 2:1, 1:1, 1:2, or 1:4.

Preferred multicomponent fibers comprise synthetic polymers (e.g., copolymers, terpolymers, etc.) Suitable polymers and copolymer components may be selected from e.g. polyester, polyamide, polyolefin, cyclic polyolefin, polyolefinic thermoplastic elastomers, poly(meth)acrylate, polyvinyl halide, polyacrylonitrile, polyurethane, poly lactic acid, and others, and combinations thereof. Suitable multicomponent fibers (e.g., bicomponent fibers) may comprise a core and a sheath structure. One potentially suitable class of commercially-available core and sheath multicomponent polymer is available under the trade designation CELBOND® (available from KoSa Co. of Wichita, Kansas), for example, CELBOND® 254 fiber wherein the sheath has a melting temperature of 110°C. Another potentially suitable multicomponent (bicomponent) fiber is available under the trade designation T255 from Trevira GmbH of Bobingen, Germany). Other commercially available multicomponent polymeric fibers are within the scope of the present disclosure. In some other exemplary embodiments, potentially suitable multicomponent polymeric fibers may comprise a first (e.g., sheath) region with a melting temperature in the range of 130-170°C, 140-160°C, or 145-155°C.

In some embodiments, the multicomponent fibers may be at least 0.25 inch (0.635 cm) long and have a denier of at least 1. In further embodiments, the multicomponent fibers may be at least 0.5 inches (1.27 cm) long and have a denier of at least 2. However, it is to be understood that the fibers can be as small as the shortest length of fiber that can be cut from a fiber, or as long as can be conveniently handled. Thus, in some exemplary embodiments, the multicomponent fibers may have a maximum length of about 20, about 10, about 6, about 4, or about 3 mm. In further embodiments, the multicomponent fibers may have a minimum length of about 1, about 2, or about 3 mm.

It will be appreciated that in order to enhance the ability of the multicomponent fibers to be mixed with the electret fibers (e.g. in the fiber mixing and depositing process described later herein), it may be advantageous that the lengths of the respective fibers be comparable. Thus, in various embodiments, the ratio of the average length of the multicomponent fibers to the average length of the electret fibers, may be at least about 1:2, 2:3, 3:4 or 4:5. In further embodiments, the ratio of the average length of the multicomponent fibers to the average length of the electret fibers, may be at most about 2:1, 3:2, 4:3, or 5:4. In specific embodiments, the ratio of the average length of the multicomponent fibers to the average length of the electret fibers, may be 1:1 plus or minus 10 %.

In various embodiments, the multicomponent fibers may comprise an average size (diameter or equivalent) of at least about 1, 5, 10, or 20 microns. In further embodiments, the multicomponent fibers may comprise an average size of at most about 100, 60, 40, or 20 microns.

If desired, non-woven electret fibrous webs according to the present disclosure may optionally include a plurality of any other discrete fibers as desired. In various embodiments, such fibers might include e.g. photo-catalytic fibers (e.g., titanium-dioxide-containing fibers), filling fibers that are chosen from e.g. monocomponent fibers, binder fibers, carbon fibers, metal fibers, ceramic fibers, natural fibers, and so on. Mixtures of any of these fibers may be included as desired.

As noted above, non-woven electret fibrous webs according to the present disclosure include a plurality of sorbent particles, which may be any discrete particles that are solid at room temperature. The term sorbent particle as used herein broadly encompasses any particle that may be useful for capturing (whether by chemisorption, physisorption, absorbtion , adsorption, chemical reaction, etc.) any desired molecules (e.g., gases, vapors, aerosols, particularly such materials as may be noxious, odorous, etc.). That is, the term sorbent broadly encompasses materials that may be generally considered to be adsorbent, and also those that may be considered to be absorbent.

Any desired particulate sorbent may be used. Potentially useful sorbents include e.g. activated carbon; silica gel; activated alumina and other metal oxides; metal particles (e.g., silver particles) that can remove a component from a fluid by adsorption or chemical reaction; particulate catalytic agents such as hopcalite (which can catalyze the oxidation of carbon monoxide); clay and other minerals treated with acidic solutions such as acetic acid or alkaline solutions such as aqueous sodium hydroxide; charcoal; sodium bicarbonate; silica gel particles, desiccant particles, molecular sieve particles and zeolites, diatomaceous earth particles, and the like. Granulated activated carbon (GAC) may be a particularly preferred sorbent for many applications. Mixtures of sorbents can also be employed, e.g., to absorb mixtures of gases.

In general, in some embodiments the sorbent particles, e.g. GAC, may have one or more chemically active materials incorporated thereon (e.g., coated thereon) or incorporated therein (e.g., impregnated thereinto) as might serve to enhance the removal of gases or vapors that are e.g. odorous, noxious, or otherwise undesirable, either by reacting with such gases or vapors and/or by catalyzing the reaction of such gases or vapors. For example, in some embodiments a catalyst (e.g., nano-scale gold particles) suitable for the oxidation of carbon monoxide might be incorporated into or onto the sorbent, e.g. into or onto granular activated carbon.

The sorbent particles can be in any usable form including beads, flakes, granules or agglomerates. The desired sorbent particle size may vary as desired for particular applications. In certain exemplary embodiments, the sorbent particles may have a standard U.S. mesh size rating of at least about 12 mesh (approximately 1680 micrometers), at least about 16 mesh (approximately 1190 micrometers), at least about 20 mesh (approximately 840 micrometers), or at least about 30 mesh (approximately 600 micrometers). In further embodiments, the sorbent particles may have a standard U.S. mesh size rating of no greater than about 70 mesh (approximately 210 micrometers) no greater than about 60 mesh (approximately 250 micrometers), no greater than about 50 mesh (approximately 300 micrometers), and no greater than about 45 mesh (approximately 355 micrometers). Exemplary materials include granular activated carbons characterized by the supplier as having a particle size distribution of 12x20 mesh, 20x40 mesh, 25x45 mesh, 30x60 mesh, or 40x70 mesh. (As an example, if the particle size of a material is described as 12x20 mesh, then 90% or more of the material will pass through a 12-mesh sieve (i.e. particles smaller than about 1680 micrometers will pass through a 12-mesh sieve) and be retained by a 20-mesh sieve (i.e. particles larger than about 841 micrometers will not pass through a 20-mesh sieve)). Suitable sorbent particles include 12x20, 20x40, 25x45, and 30x60 mesh sized granular activated carbon available e.g. from Kuraray Chemical Corporation, Canoga Park, California. Mixtures (e.g., bimodal mixtures) of sorbent particles having different size ranges may also be employed.

In various exemplary embodiments, at least 80 weight percent sorbent particles, at least 84 weight percent sorbent particles, or at least 90 weight percent sorbent particles may be contained (e.g., enmeshed) in the web, as expressed on a basis of weight of sorbent particles as a percentage of the total materials of the web (including the particles, and the fibers of the web, but not including any support layer). In other embodiments, at least 65 weight percent sorbent particles, at least 70 weight percent sorbent particles, or at least 75 weight percent sorbent particles may be contained in the web. In further embodiments, at most 90, 85, 80, or 75 weight percent sorbent particles may be contained in the web.

Expressed in terms of the web basis weight, the sorbent loading level may for example be at least about 500 gsm, or at least about 2,000 gsm, expressed on a basis of weight of sorbent particles per unit area of the web. In other embodiments, the sorbent loading level may be at least about 100, 200, 300, 400, or 500 gsm. In further embodiments, the sorbent loading level may be at most about 800, 600, 500, 300, or 200 gsm.

As mentioned, various sizes and amounts of sorbent particles may be used in the non-woven electret fibrous web. In some exemplary embodiments, the sorbent particles may have a median size greater than 1 mm in diameter. In other exemplary embodiments, the sorbent particles may have a median size less than 1 cm in diameter. In some embodiments, a combination of particles sizes can be used. In some exemplary embodiments, the sorbent particles include a mixture of large particles and small particles. Thus in summary, the desired sorbent particles' sizes can vary a great deal and usually will be chosen based in part on the intended service conditions. As a general guide, sorbent particles particularly useful for fluid filtration applications may vary in size from about 0.001 to about 3000 $\mu$m median diameter. In some embodiments the sorbent particles may be from about 0.01 to about 1500 $\mu$m median diameter, or from about 0.02 to about 750 $\mu$m median diameter, or from about 0.05 to about 300 $\mu$m median diameter. In specific embodiments the sorbent particles may be from about 200 to about 900 $\mu$m median diameter, or from about 250 to about 850 $\mu$m median diameter, or from about 400 to about 600 $\mu$m median diameter.

As mentioned, any suitable size or shape of particulate sorbent may be selected. Suitable particles may have a variety of physical forms (e.g., solid particles, porous particles, hollow bubbles, agglomerates, discontinuous fibers, staple fibers, flakes, and the like); shapes (e.g., spherical, elliptical, polygonal, needle-like, and the like); shape uniformities (e.g., monodisperse, substantially uniform, non-uniform or irregular, and the like); composition (e.g. inorganic particles, organic particles, or combination thereof); and size (e.g., sub-micrometer-sized, micro-sized, and the like).

It may be desirable to control the size of a population of the sorbent particles, e.g. in order to enhance the degree to which the sorbent particles are enmeshed, physically trapped, etc., in the non-woven electret fibrous web. Thus in various embodiments, the population of particles may be selected to have a median diameter of at least 50 $\mu$m, at least 75 $\mu$m, or at least 100 $\mu$m, with particularly useful size ranges (above and beyond these exemplary lower limits) being presented above. In terms of general upper limits, in some embodiments, the sorbent particles may have a median size less than 1 cm in diameter. In further embodiments, the particles may have a median size of less than 1 mm. In further exemplary embodiments, the particles may comprise a population of micro-sized particles having a population median diameter of at most about 2,000 $\mu$m, at most about 1,000 $\mu$m, or at most about 500 $\mu$m. Again, particularly useful size ranges (beyond these general guides) are presented above.

Depending, for example, on the density of the particles, size of the particles, and/or desired attributes of the final non-woven electret fibrous web article, a variety of different loadings of the particles may be used relative to the total weight of the fibrous web. In one some embodiments, the particles comprise less than 90% wt. of the total non-woven article weight. In some embodiments, the particles comprise at least 10% wt. of the total non-woven article weight. Once again, particularly useful loadings of the particles are provided above.

In any of the foregoing embodiments, the particles may be conveniently distributed throughout the entire thickness of the non-woven electret fibrous web. However, in some of the foregoing embodiments, the particles may be preferentially distributed substantially at or near a major surface of the non-woven electret fibrous web. Furthermore, it is to be understood that any combination of one or more of the above described sorbent particles may be used in non-woven electret fibrous webs according to the present disclosure.

In any of the foregoing embodiments, the non-woven electret fibrous web may be substantially free of any added binder. However, in some of the foregoing embodiments, the non-woven electret fibrous web may further comprise a binder coating covering at least a portion of the plurality of randomly oriented discrete fibers. In some exemplary embodiments, the binder may be a liquid or a solid powder.

The non-woven electret fibrous webs of the present disclosure may comprise an additional layer or layers. The one or more additional layers may be present over and/or under an outer surface of the non-woven electret fibrous web. In some embodiments, the additional layer may be a support layer. In presently preferred embodiments, the support layer is porous. Such a support layer may be useful e.g. in minimizing any sticking of the fibers of the non-woven electret fibrous web to a heated calender roll through which the web may be passed to promote bonding of the fibers. However, such a support layer may also enhance the strength of the web in order to subject it to further processing, which may include, but is not limited to, winding the web into roll form, removing the web from a roll, molding, pleating, folding, stapling, weaving, and the like.

A variety of porous support layers may be used in the present disclosure. Suitable support layers include, but are not limited to, a non-woven fabric, a woven fabric, a knitted fabric, a foam layer, a film, a paper layer, a polymeric netting, an adhesive-backed layer, a foil, a mesh, an elastic fabric (i.e., any of the above-described woven, knitted or non-woven fabrics having elastic properties), a web with an aperture, an adhesive-backed layer, or any combination thereof. In one exemplary embodiment, the porous support layer comprises a polymeric non-woven fabric. Suitable non-woven polymeric fabrics include, but are not limited to, a air-laid fabric, a meltblown fabric, a carded web, a needle-punched fabric, a split film web, a wet-laid hydro-entangled web, an air-laid staple non-woven electret fibrous web, or a combination thereof. Polymeric nettings that may be suitable include for example certain materials available from Conwed Corp. of Minneapolis, MN. In certain exemplary embodiments, the support layer comprises a web of bonded staple fibers. Such bonding may be effected using, for example, thermal bonding, adhesive bonding, powdered binder bonding, hydroentangling, needlepunching, calendering, or a combination thereof. In some embodiments, the support layer comprises a spun-bond nonwoven web.

The support layer may have a basis weight and thickness depending upon the particular end use of the composite non-woven fibrous article. In some embodiments of the present disclosure, it may be desirable for the overall basis weight and/or thickness of the composite non-woven fibrous article to be kept at a minimum level. In other embodiments, an overall minimum basis weight and/or thickness may be required for a given application. In many embodiments, the support layer may have a basis weight of less than about 150 gsm. In some embodiments, the support layer may have a basis weight of from about 5.0 gsm to about 100 gsm. In other embodiments, the support layer may have a basis weight of from about 10 gsm to about 75 gsm. In still other embodiments, the support layer may have a basis weight of from about 2.0 gsm to about 20 gsm; in further embodiments, from about 5.0 gsm to about 15 gsm, in still further embodiments, from about 8.0 gsm to about 12 gsm.

As with the basis weight, the support layer may have a thickness, which varies depending upon the particular end use of the composite non-woven fibrous article. Typically, the support layer has a thickness of less than about 150 millimeters (mm), less than 100 mm, or less than 50 mm. In further embodiments, the support layer has a thickness of less than about 150 microns, less than about 100 microns, less than about 50 microns, or less than about 20 microns. In other embodiments, the support layer has a thickness of at least about 0.1 mm, or at least 0.5 mm, or at least 1.0 mm. In some embodiments of the present disclosure, the support layer comprises a spun-bonded fabric comprising e.g. polypropylene fibers.

In some exemplary embodiments, non-woven electret fibrous webs of the present disclosure may further comprise one or more optional additional layers. For example, a layer may be provided that is a pre-filter layer (e.g., that serves to perform filtration of coarse particles), a decorative layer, an abrasion-resistant layer, and so on. If desired, an electret-containing second filtration layer (e.g., a charged blown micro-fiber layer), may be provided.

Exemplary embodiments of the present disclosure provide a process for preparing a non-woven electret fibrous web as described above, which process generally comprises the steps of subjecting the electret fibers, the multicomponent fibers, and the plurality of sorbent particles to the following process steps to form a non-woven electret fibrous web: opening, mixing, delivering to a feeding device, then gravity-laying the mixed and delivered fibers and particles in a forming chamber to form a collection of intermingled fibers and particles, followed by bonding of at least the multicomponent fibers of the collected fibers and particles. Those of ordinary skill will appreciated that the step of "opening" means to mechanically agitate fibers to transform them from a highly compressed state (e.g., as-received in a bale), into a more loose and open state in which they can be e.g. further de-agglomerated, mixed with other fibers, etc.

In exemplary embodiments, the non-woven electret fibrous webs may be formed using an air-laying method and apparatus of the type described in detail in Examples B1-B9 herein), which generally includes providing a forming chamber having an upper end and a lower end and containing rotating fiber-separating rollers that comprise protrusions (referred to by the general term spikes, although they may be of any suitable design). The spikes of adjacent rollers are in intermeshing relation (although they typically do not contact each other), and so can apply shear force to agglomerates of fibers (particularly when an agglomerate is momentarily caught between two moving, e.g. counter-rotating, spikes) and at least partially separate the agglomerates into individual fibers or into agglomerates of smaller numbers of fibers, and can also mix fibers (and particles) with each other. If desired an endless belt screen (e.g., with through-holes of sufficient size that at least some of the fibers and/or particles may pass therethrough) may be provided in the chamber to enhance any desired recirculation of the fibers and particles. The method thus involves introducing a plurality of discrete fibers into the upper end of the forming chamber, transporting a population of the fibers to the lower end of the forming chamber as substantially discrete fibers (with the fibers being de-agglomerated, mixed, etc. by the moving spikes during their journey through the forming chamber), and collecting on a collector surface the population of substantially discrete, mixed and randomly intermingled fibers as a non-woven electret fibrous web. Typically, the fibers and particles are motivated from the upper end to the lower end of the forming chamber by gravity (although their journey may be prolonged by their being impinged on the moving spikes, deflected up (e.g., recirculated) within the chamber, etc.). While for convenience of description such a process may be described herein as falling with the general category of air-laying processes, it will be appreciated that such a forming process, which is sometimes termed a "gravity-laying" process (see e.g. U.S. Patent Application Publication No. 2011/0247839), is quite different from a conventional air-laying process (and thus may be uniquely qualified to form the herein-disclosed web). Specifically, such a process, which will be referred to hereforward as a gravity-laying process, involves the low-velocity transport, driven substantially by gravity (although a vacuum may be applied to the underside of the collector surface to aid in the deposition), of fibers through a forming chamber, with mixing of the fibers occurring during the transport as achieved by the moving spikes therein. In contrast, conventional air-laying processes (such as those using commercially available web forming machines such as those marketed under the trade designation "RANDO WEBBER" by Rando Machine Corp. of Macedon, N.Y.) typically involve the use of a lickerin roll (generally rotating at relatively high speed) and a high velocity air stream to convey fibers onto a collecting surface. Thus, the method of making a fibrous electret web as disclosed herein, by definition does not involve ordinary operation of a conventional air-laying process.

In some exemplary gravity-laying embodiments, the collector may be a moving collector (e.g., an endless belt that travels underneath the lower end of the forming chamber and that can carry the collected mixture of fibers and particles away from the forming chamber). It will be appreciated that due to the motion of such a moving collector, there may be a tendency for the fibers to be collected in an arrangement in which they are slightly oriented, on average, in the direction of motion of the collector. However, any such tendency will typically be small and will not detract from the characterization of the collected fibers as being randomly arranged (and mixed, intermingled, etc.).

In some exemplary gravity-laying embodiments, the collector surface may have an identifiable pattern on a patterned collector surface, wherein the identifiable pattern may comprise a plurality of non-hollow projections extending from a major surface of the non-woven electret fibrous web (as considered without the projections), and a plurality of substantially planar land areas formed between each adjoining projection in a plane defined by and substantially parallel with the major surface.

In further exemplary embodiments of the disclosure, the opening roller in the opening treatment (as used to open fibers from an as-received condition e.g. in a compressed bale) can have a frequency of 30-50 Hz. In a further exemplary embodiment of the disclosure, the opening roller in the opening treatment can have a frequency of 40-50 Hz. In additional exemplary embodiments of the disclosure, the non-woven electret fibrous web can have a basis weight of 40 to 250 gsm. In another further exemplary embodiment of the disclosure, the non-woven electret fibrous web can have a basis weight of 80 to 150 gsm. In other further exemplary embodiments of the disclosure, at least some of the bonding of the web fibers may be accomplished by heated air (e.g., by through-air bonding) in which the hot air temperature is e.g. about 130°C to about 150°C. In a specific exemplary embodiment of the disclosure, the hot air temperature is 135-145°C. In other specific exemplary embodiments of the disclosure, the hot air temperature is 145-155°C.

More specifically, the non-woven electret fibrous webs can be advantageously prepared by different processes applying unique sequences of steps to produce different non-woven electret fibrous webs. The detailed processes are described in exemplary manner below.

The desired fibers are weighed according to the demand of processing, put into a coarse opening apparatus, and opened using the spikes in the apparatus rotating at a high speed of 30-50 Hz. Then, the fibers are sent to a mixing apparatus for mechanically mixing the fibers. Then, the fibers are subjected to a fine opening treatment in a manner similar to that of the coarse opening treatment to further finely open the fibers. The fibers are introduced into a feeding device for feeding the fibers uniformly and the feeding amount is controlled. Then, the fibers are sent to the next process, i.e., an air-laying machine (specifically, a gravity-laying machine of the general type described in the Working Examples herein, and also described e.g. in U.S. Patent Application Publication No. 2011/0247839 for forming a substantially uniform non-woven electret fibrous web. The gravity-laid non-woven electret fibrous web (which at this point (prior to bonding) may not necessarily have enough cohesive strength to be a self-supporting web) may then be subjected to autogenous bonding, i.e., heated-air bonding (e.g., through-air bonding) in an oven at a temperature of e.g. 130-150°C so as to form an at least partially bonded web. The web is then be calendered, e.g. at a temperature of e.g. 130-160 °C, so as to form the final, bonded web (i.e., a cohesive web with sufficient strength to be self-supporting as defined herein). The temperatures of any autogenous bonding and calendering steps may of course be chosen in light of the composition (and the resulting melting points) of the components of the multi-component fibers, and also in view of the temperatures to which the electret fibers can be exposed without deleteriously affecting their charge state.

In addition to the foregoing methods of making a non-woven fibrous webs, one or more of the following process steps may be carried out, alone or in combination, on the non-woven fibrous web once formed:

(1) advancing the non-woven fibrous web along a process pathway toward further processing operations;
(2) bringing one or more additional layers into contact with an outer surface of the non-woven fibrous web;
(3) calendering the non-woven fibrous web;
(4) pleating the non-woven fibrous web, particularly after calendering;
(5) coating the non-woven fibrous web with a surface treatment or other composition (e.g., a fire retardant composition, an adhesive composition, or a print layer);
(6) attaching the non-woven fibrous web to a cardboard or plastic tube;
(7) winding-up the non-woven fibrous web in the form of a roll;
(8) slitting the non-woven fibrous web to form two or more slit rolls and/or a plurality of slit sheets;
(9) placing the non-woven fibrous web into a mold and molding the non-woven fibrous web into a new shape;
(10) applying a release liner over an exposed optional pressure-sensitive adhesive layer, when present; and
(11) attaching the non-woven fibrous web to another substrate via an adhesive or any other attachment device including, but not limited to, clips, brackets, bolts/screws, nails, and straps.

The disclosure also provides various methods of making a non-woven electret fibrous webs including a plurality of sorbent particles, preferably granulated activated carbon, according to any of the foregoing embodiments. Suitable processes for preparing a non-woven electret fibrous webs comprising particles generally comprise the steps of subjecting the electret fibers and the multicomponent fibers (and, mono-component thermoplastic fibers if present, carbon-based fibers if present, etc.) to an opening process, then carrying out the following steps to form a non-woven electret fibrous web containing sorbent particles: delivering the fibers and the particles to one or more feeding devices, mixing the fibers and the particles and air laying (i.e., gravity-laying) the mixed fibers and particles, then bonding the non-woven electret fibrous web containing the fibers and the particles.

Thus, in further detail regarding the foregoing air-laying method, the method further includes introducing a plurality of sorbent particles into the forming chamber and mixing the plurality of discrete fibers with the plurality of sorbent particles within the forming chamber to form a fibrous particulate mixture before capturing the population of substantially discrete fibers as a non-woven electret fibrous web, and securing at least a portion of the sorbent particles to the non-woven electret fibrous web. In any of the foregoing air-laying embodiments, the particles may be introduced into the forming chamber at the upper end, at the lower end, between the upper end and the lower end, or a combination thereof. Conveniently, transporting the fibrous particulate mixture to the lower end of the forming chamber to form a non-woven electret fibrous web may comprise dropping the discrete fibers into the forming chamber and permitting the fibers (and particles) to drop through the forming chamber under the force of gravity. In some embodiments, transporting the fibrous particulate mixture to the lower end of the forming chamber to form a non-woven electret fibrous web may comprise dropping the discrete fibers into the forming chamber and permitting the fibers to drop through the forming chamber under the forces of gravity with the assistance of a vacuum force applied to the lower end of the forming chamber (e.g., applied to the underside of a collector such as an endless belt).

As discussed herein, the non-woven electret fibrous web as formed by the above-described air-laying method may be processed to obtain a pleated web having a corrugated or pleated structure to increase the overall surface area available for entrapment or adsorption of airborne contaminants. In some embodiments, such a pleated web may be formed by air-laying the web components onto a patterned perforated collector having a three-dimensional corrugated pattern comprising, for example, a plurality of V-shaped lands and grooves, while passing an air stream through the perforations in the patterned perforated collector. A thus-formed non-woven fibrous web is subsequently subjected to a fiber bonding process.

In some embodiments, pleating may be performed by use of a conventional pleating apparatus such as e.g. a blade pleater, a gear pleater, a knife pleater, or a rotary pleater. Such pleating apparatus and processes are well known to the ordinary artisan and are referred to in e.g. U.S. Patent Nos. 4,798,575, 4,976,677, 5,389,175, and 6,521,011. It will be appreciated that in some instances it may be desirable to choose methods that do not involve e.g. crushing or scoring of areas of the web (e.g., as may occur with use of a rotary-score pleater) since such scoring may disadvantageously crush some of the sorbent particles (e.g. activated carbon granules) in the scored areas. Thus, in particular embodiments, the web may be pleated by a blade pleater.

Regardless of the particular method, such methods may transform the non-woven electret fibrous web 3 (and e.g. any support layers bonded thereto) into a pleated filter 13 of the general type shown in Fig. 4, in which the filter comprises a plurality of downstream pleat tips 14 and upstream pleat tips 15, each pleat tip being neighbored (along the direction of pleating, which pleat direction is indicated by arrow $P_d$ in Fig. 4) by first and second sloping pleat walls. (For example, each downstream pleat tip 14 in Fig. 4 is neighbored by first and second pleat walls 16 and 17). Typically, each pleat tip extends linearly in a direction perpendicular to the pleat direction $P_d$, with the successive pleat tips being spaced (typically, uniformly spaced) along pleat direction $P_d$, e.g. at a predetermined pleat spacing. In such embodiments, first and second (downstream and upstream) major surfaces 21 and 22 of the pleated filter will be locally parallel to each other and locally oppositely-facing, at generally all locations of the pleated filter. (It will be understood that any such pleating process performed on the non-woven electret fibrous web which will also result in the commensurate pleating of any support layer bonded thereto.) Such a pleating process may, if desired, include a heat-stabilizing step (in which the pleated media is held at an elevated temperature, e.g. in the range of 65 - 80 °C, for a desired time).

In any of the foregoing exemplary embodiments, securing the particles to and/or within the non-woven electret fibrous web may comprise at least one of thermal bonding, autogenous bonding, adhesive bonding, powdered binder binding, hydroentangling, needlepunching, calendering, or a combination thereof. As described in detail, thermal bonding may be particularly usefully employed. In some embodiments, such thermal bonding may include bonding multicomponent fibers to each other (and optionally to electret fibers) to form a fibrous network that may physically entrap the sorbent particles within. In other embodiments, such thermal bonding may include bonding multicomponent fibers to the sorbent particles. In many embodiments, some of both mechanisms may occur. In particular embodiments, securing the particles to the non-woven electret fibrous web may comprise heating the multicomponent fibers of the web to a temperature of at least the first melting temperature of a first region of the multicomponent fibers and less than the second melting temperature of a second region of the multicomponent fibers, whereby at least a portion of the particles are bonded to the at least first region of at least a portion of the multicomponent fibers, and at least a portion of the discrete fibers are bonded together at a plurality of intersection points with the first region of the multicomponent fibers (after the fibers are cooled sufficiently to re-solidify the first regions of the fibers). In any of the foregoing exemplary embodiments, a liquid may be introduced into the forming chamber to wet at least a portion of the discrete fibers, whereby at least a portion of the particles adhere to the wetted discrete fibers in the forming chamber.

In any of the foregoing embodiments, the non-woven electret fibrous web may be formed on a collector, wherein the collector is selected from a screen, a scrim, a mesh, a metal mesh (e.g., an expanded-metal mesh), a non-woven fabric, a woven fabric, a knitted fabric, a foam layer, a porous film, a perforated film, an array of fibers, a melt-fibrillated non-woven electret fibrous web, a meltblown fibrous web, a spun bond fibrous web, an air-laid fibrous web, a wet-laid fibrous web, a carded fibrous web, a hydro-entangled fibrous web, and combinations thereof. In particular embodiments, such a collector may comprise a moving belt (e.g., an endless moving belt, as mentioned above) made of a porous material (e.g., a wire mesh or screen). Conveniently, a fibrous first support layer as described herein may be provided on the moving belt (i.e., on the surface of the belt that, within the forming chamber, faces the falling fibers and particles) before or as the belt enters the forming chamber, so that mixture of fibers and sorbent particles is deposited onto the first support layer, with the collected fibers/particles then being carried out of the forming chamber by the endless belt, while still remaining on the first support layer, for further processing (e.g., thermal bonding).

In other examples of any of the foregoing embodiments, the method may further comprise applying a (e.g., pre-formed) fibrous second support layer overlaying the non-woven electret fibrous web. In specific embodiments, such a second support layer may be applied atop the layer of deposited/collected fibers and particles, as or after the layer leaves the forming chamber. For convenience of description a first support layer upon which the fibers and particles are deposited may be referred to as a lower support layer, while a second support layer that is placed upon the layer of deposited/collected fibers and particles may be referred to as an upper support layer. (However, it will be understood that the upper and lower support layers may be identical and/or they may not always remain in an upper/lower relationship (e.g., the multilayer structure may be flipped over, etc.)). Thus in some embodiments, the layer of deposited/collected fibers may have a fibrous first support layer beneath the deposited/collected layer, and a fibrous second support layer above the deposited collected layer (so that the layer of deposited/collected fibers is sandwiched between the two support layers to form a stack). The entire stack may then be subjected to a bonding process, e.g. a thermal bonding process, which may serve to partially bond at least some of the multicomponent fibers to each other, and possibly to bond the multicomponent fibers to any or all of the sorbent particles, the electret fibers, and the fibers of the fibrous support layer(s).

In some particular embodiments, the deposited/collected layer of fibers/particles, e.g. atop the lower support layer, may be subjected to an autogenous bonding process (e.g., by the application of heated air as supplied e.g. by an oven, a through-air bonder, or the like) so as to at least partially bond at least some of the multicomponent fibers to each other (and possibly to the sorbent particles, to the electret particles, and to the lower support layer). An upper support layer may then be placed atop the deposited/collected/partially bonded layer and the entire stack then further thermally processed (e.g., by being passed through a heated calender) as desired. In other embodiments, a second, upper support layer may be placed atop the deposited/collected layer, prior to any autogenous bonding, which layer will then remain in place throughout any autogenous bonding and also any subsequent heated calendering. In either case, the second support layer may end up permanently attached to the non-woven electret fibrous layer (as may the first support layer). In some embodiments, the attaching of the first and/or second support layers to the non-woven electret fibrous web may be augmented by other bonding methods such as e.g. needle-punching, use of separately added binder (whether in liquid, powder or fiber form), etc. In other embodiments, thermal bonding is the only bonding that is used in attaching these layers to the non-woven electret fibrous web. In any event, a support layer as disclosed herein is a layer that by definition is pleated along with the non-woven electret fibrous web to which it is bonded, so that it follows the contours of the pleated non-woven electret fibrous web. Such a fibrous first or second support or cover layer may be a layer that had been formed e.g. by air-laying, wet-laying, carding, melt blowing, melt spinning, electrospinning, plexifilament formation, gas jet fibrillation, fiber splitting, or a combination thereof. In some embodiments, such a first or second support layer comprises a spun-bond nonwoven web, e.g. a web comprising meltspun fibers that have been thermally point-bonded to form a self-supporting web. It will be appreciated that in some embodiments it may be possible to avoid the use of e.g. an upper support layer (that remains a permanent part of the pleated filter). In such embodiments, a disposable liner might be placed between the collected fibers and the surface of a heated calendering roll; or, the calendering might be provided with e.g. a non-stick surface to minimize any tendency for the fibers to stick to the roll.

As described herein, a calendering process serves to perform the final bonding of the multicomponent fibers to each other, to the electret fibers, to the sorbent particles, and to the fibers of first and second support layers (if one or both are present). However, it has been found that such calendering can also densify the non-woven electret fibrous web from its as-deposited state (in which the fibers and particles may be deposited under the influence of e.g. gravity, in a relatively loose, low-solidity state), into a high solidity state, specifically one in which the web comprises a relatively high stiffness that renders it amendable to being pleated. In various embodiments, such a calendering process may provide that the thickness of the calendered web is no more than about 90, 80, 60, 40 or 20 % of the thickness of the as-deposited web. In further embodiments, such a calendering process may provide that the thickness of the calendered web is at least about 10, 20, 40, or 60 % of the thickness of the as-deposited web. In various embodiments, a calendered web as disclosed herein may comprise a solidity of at least about 20 or 22 %. In further embodiments, a calendered web as disclosed herein may comprise a solidity of at most about 28, 26, or 24 %. It will be appreciated that such solidities are quite high e.g. in comparison to conventional fibrous webs as are typically used for air filtration and the like. However, it has been unexpectedly found that even at such high solidities, the herein-disclosed non-woven electret fibrous webs may exhibit advantageously low pressure drops while maintaining excellent filtration efficiencies, as evidenced in the Working Examples (e.g., Example Set A) herein.

In some embodiments of the process, it may be possible to obtain the particles preferentially at or near one surface of the non-woven article. Further, it may be possible to obtain a distribution of the particles throughout the thickness of the non-woven article. In such embodiments, the particles therefore may be available on both working surfaces of the web and throughout the thickness of the web. In some embodiments, the fibers can be wetted to aid in the clinging the particles to the fibers until the fiber can be melted to secure the particles. In some embodiments, a vacuum can be introduced to assist in pulling the particles throughout the thickness of the non-woven article.

Thus, the herein-described non-woven electret fibrous web is formed by calendering and then mechanically pleating a bonded non-woven fibrous web formed by the herein-described air-laying (specifically, gravity-laying) process. The pleated web includes electret fibers and a plurality of sorbent particles, preferably granulated activated carbon particles; and, a plurality of multicomponent fibers (and other optional components as described herein).

It will be appreciated that in many embodiments the herein-described non-woven electret fibrous web may comprise a low weight ratio of multicomponent (bonding) fibers to sorbent particles, and also a low weight ratio of multicomponent fibers to electret fibers. These factors combine to provide that, in many embodiments, the multicomponent fibers may be present at a very low percentage of the total weight of the components of the web. For example, in the exemplary Working Examples presented herein, the weight ratio of multicomponent fibers to sorbent particles ranges from approximately 5.7 % to 12.5 %; the weight ratio of multicomponent fibers to electret fibers ranges from approximately 50 % to 111%; and the weight ratio of multicomponent fibers to the total weight of the components of the web (not including any support layers) ranges from approximately 5.5 % to 9.7 %. It will be appreciated that it is unexpected that multicomponent (bonding) fibers can be provided at such a low level in comparison to the particles that are to be bonded/entrapped within the web, and in particular at such a low level in comparison to the total material of the web, while still achieving satisfactory bonding/entrapping of the particles within the web, and while still achieving a web with satisfactory physical properties (i.e., while providing a web that is self-supporting and pleatable).

In various embodiments, the herein-described non-woven electret fibrous web may comprise a weight ratio of multicomponent fibers to sorbent particles of about 4 % to about 14 %, or of about 6 % to about 13 %; or of about 8 % to about 12 %. In specific embodiments within any of these embodiments, the herein-described non-woven electret fibrous web may comprise a weight ratio of multicomponent fibers to the total weight of the components of the web (not including any support layers) of about 4 % to about 10 %, or of about 6 % to about 9 %.

In some embodiments, the non-woven electret fibrous web may be subjected to a charging process. Such a web-charging process may e.g. further enhance any charges possessed by the electret fibers and/or may enhance the ability of the fibers to maintain these charges. Thus, in some embodiments electret fibers may be subjected to an initial charging process prior to web formation; and, an additional (final) charging process may be formed on the web in order to reach the desired final charge state of the electret fibers. In other embodiments, the web may comprise fibers that, although they may comprise e.g. electret charging enhancement additives, did not go through a charging process prior to the fibers being formed into a web. In such particular embodiments, the post-web-formation process may be the only charging process that such fibers undergo. In various embodiments, a post-web-formation charging process may include e.g. any or all of corona charging, tribocharging, hydrocharging, corona treatment followed by hydrocharging, and plasma treatment followed by hydrocharging. Such a charging process might be performed e.g. before or after the application of an aforementioned upper support layer to the non-woven electret fibrous web (thus, in some embodiments, some degree of charging may be imparted to the material of the support layer(s)). Such a web-charging process may be performed before or after any calendering step.

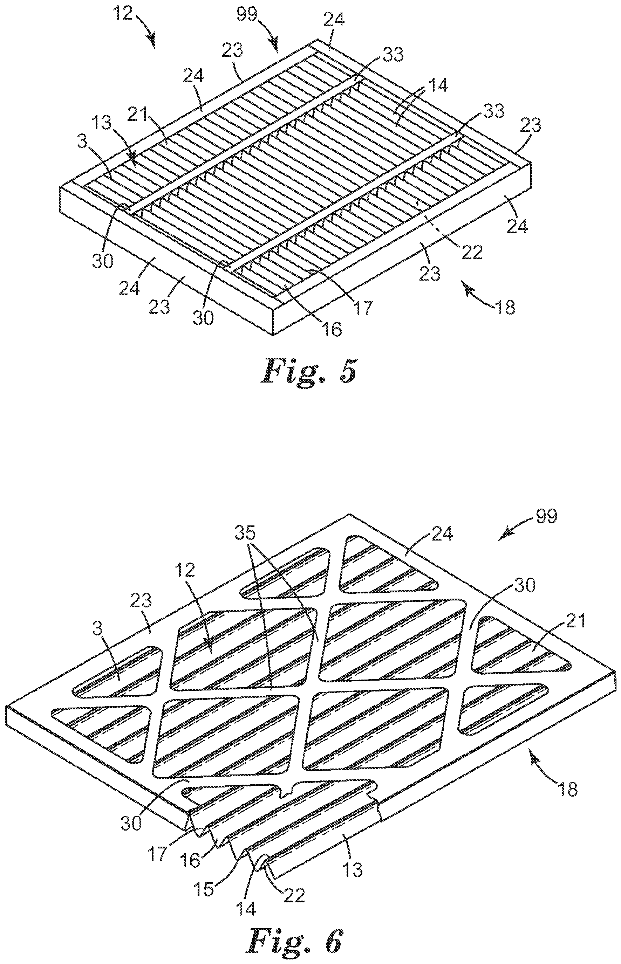

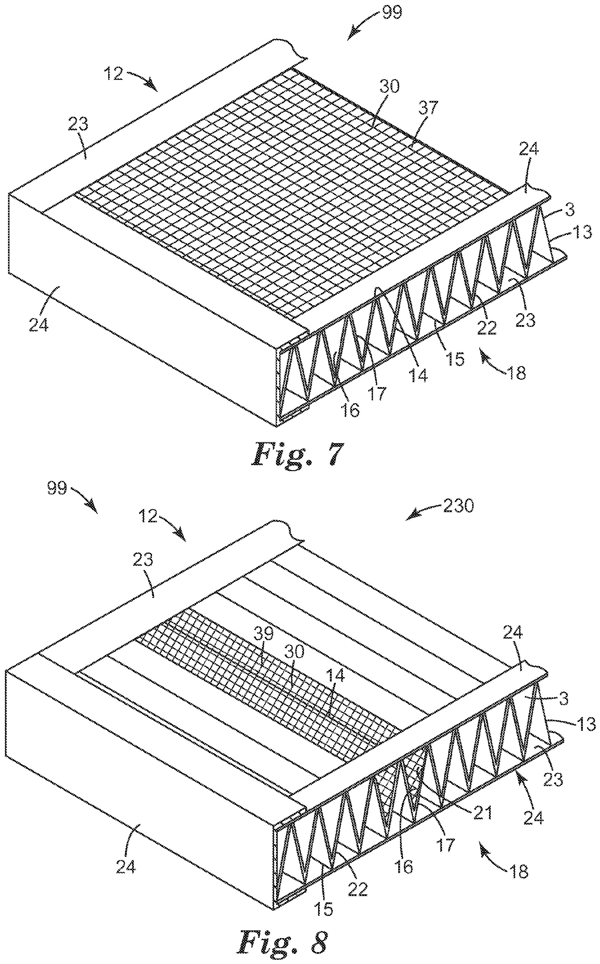

A herein-described pleated, non-woven electret fibrous web may be made into a framed filter by mounting a frame to the major edges of the pleated filter comprising the non-woven electret fibrous web, in any convenient manner. As shown in Fig. 5, such a framed filter may comprise pleated filter (media) 13 having first (downstream) 21 and second 22 (upstream) opposed major surfaces and a perimeter edge region 23, with a perimeter frame 24 arranged around at least the perimeter edge region of the pleated filter 13. Suitable materials for the frame include chip board, or paperboard, and synthetic plastic materials. Other suitable frames may be formed e.g. by side band framing, insert molding and the like. Suitable frame constructions include the "pinch" frame construction illustrated in Figures 1-4 of U.S. Patent No. 6,126,707, the "box" frame construction illustrated in Figures 5 and 6 of U.S. Patent No. 6,126,707, the hybrid frame construction illustrated in Figures 7-11 of U.S. Patent No. 6,126,707 , any of the frame constructions disclosed in U.S. Patent No. 7,503,953, and any of the frame constructions disclosed in U.S. Patent No. 7,235,115. In specific embodiments, such a frame may comprise a channel frame with a generally U-shaped cross-section (e.g., as shown in exemplary embodiment in Fig. 7 herein), with the open end of the U facing toward the pleated air filter, and with the arms of the U being attached (e.g., adhesively bonded, stapled, etc.) to the filter media. The pleated filter 13 (whether unframed as in Fig. 4, or in the form of a framed pleated filter 99 as in Figs. 5-8) includes one or more pleat-stabilizing members 30 on a major side, e.g. a downstream side 12, of the pleated filter. In this context, downstream refers to the major side of the filter through which filtered air exits the filter, which downstream side is opposite the upstream side 18 that is subject to the pressure of filterable air impinging thereon. (Downstream side 12 is thus the upper side in the views of Figs. 4-8). Thus, the providing of at least one pleat-stabilizing member on the downstream side of the pleated filter may minimize any tendency of the pleated filter to deform (e.g., deflect, billow, spread, etc.) in a downstream direction under the pressure of impinging air. In some cases, it may be advantageous to provide at least one pleat-stabilizing member 30 on the downstream side 12 of the pleated filter, and also to provide at least one pleat-stabilizing member 30 on the upstream side 18 of the pleated filter (recognizing that in some cases, a pleated filter may be symmetrical so that an upstream side and a downstream side may be interchangeable). In some embodiments, a pleat-stabilizing member may be provided only on an upstream side of the filter, provided that such a pleat-stabilizing member is bonded to at least some of the upstream pleat tips (and, optionally, to at least some of the upstream pleat walls) in such manner as to minimize any tendency of the pleated filter to deform in a downstream direction under the pressure of impinging air. In various embodiments, a pleat-stabilizing member 30 may or may not be attached or connected to perimeter frame 24, if such a frame is present.

A pleat-stabilizing member 30 by definition has at least a long axis that extends at least generally in the pleat direction $P_d$ of the pleated filter (e.g. as shown in Fig. 4) so that the member extends across (and may contact) multiple (i.e., three or more) pleat tips. In various embodiments, a pleat-stabilizing member may extend across (and may contact) e.g. four, six, eight, ten, or even generally all of the pleat tips of a given face of the pleated filter (that is, all of the pleat tips that are exposed within the (usable) area of the filter media that is laterally inward from the perimeter frame). However, it is not required that such a member have a long axis that is exactly, or even substantially, aligned with the pleat direction, as will be clear from the later discussions of e.g. the embodiment of Fig. 6. A pleat-stabilizing member by definition has adequate strength to prevent the pleats of the pleated filter that the member stabilizes, from being unacceptably deformed under the air pressure typical of a residential HVAC system (whether such member is in the form of e.g. a single strip, an array of filaments (e.g. a metal mesh), etc.). In an exemplary illustration, a pleat-stabilizing member may satisfactorily minimize deformation of a nominal 51 x64 cm (20" x 25") size pleated filter of a general composition disclosed herein and comprising a pleat spacing of 10 mm and a pleat height of 19 mm, when exposed to an airstream with a face velocity of 1.5 meters per second.

In some embodiments, such a pleat-stabilizing member 30 may comprise a continuous strand of (solidified) adhesive that extends at least generally in the pleat direction of the pleated filter and that contacts the pleated filter at least at some pleat tips thereof, and that further contacts at least a portion of pleat walls 16 and 17. Two exemplary pleat-stabilizing members 31 of this type are shown in Fig. 4 (this type of pleat-stabilizing member is discussed in more detail e.g. in U.S. Patent No. 7,896,940). Although shown on the downstream side of the pleated filter in Fig. 4, such a pleat-stabilizing member may be also present, or instead present, on the upstream side of a pleated filter. (Here and elsewhere, contacting a pleated filter, e.g. a surface thereof, encompasses both the case of contacting a surface of the non-woven electret fibrous web, and the case of contacting a surface of a support layer bonded thereto.)

In some embodiments, a pleat-stabilizing member may be bonded to the tips of pleats of the pleated filter. In the embodiment of Fig. 4, such a member is bonded to both pleat tips and to at least portions of pleat walls. In other embodiments, a pleat-stabilizing member 30 may be bonded to pleat tips but not to pleat walls. Often such a pleat-stabilizing member may be generally planar. In a specific embodiment of this general type shown in Fig. 5, a pleat-stabilizing member 30 may comprise an elongated, generally planar strip 33 that extends at least generally in the pleat direction of the pleated filter and that is bonded to multiple pleat tips 14 of downstream side 12 of the pleated filter, but which strip 33 is not bonded to any substantial portion of pleat walls 16 or 17. Two exemplary pleat-stabilizing members 33 of this general type are depicted in Fig. 5. Although shown on the downstream side of the pleated filter in Fig. 5, such a pleat-stabilizing member 33 may be also present, or instead present, on the upstream side of a pleated filter. Such a pleat-stabilizing member 33 may or may not be attached to a perimeter frame 24.

In some embodiments, a generally planar pleat-stabilizing member may be integrally connected to portions of the perimeter frame 24. In specific embodiments, this may take the form of one or more members that are integrally connected to perimeter frame 24 and that extend across at least portions of a laterally-inward area that is defined by the perimeter frame and that contains exposed filter media, which members extend across multiple pleat tips and are interspersed with through-passages that allow moving air to contact the exposed filter media. Exemplary pleat-stabilizing members 35 of this general type are shown in Fig. 6. In this case of pleat-stabilizing members that are integrally connected to portions of a perimeter frame, the members do not necessarily have to be bonded to the pleat tips (or to any portion of the pleats), although this can be done if desired. However, if such members are not bonded to the pleat tips, the members should be provided at least on the downstream side of the pleated filter (although they can also be provided on the upstream side as well). It will be appreciated however that a conventional perimeter frame in and of itself (i.e., without portions extending across an exposed laterally-inward area of the pleated filter and extending across multiple pleat tips thereof) by definition does not constitute a pleat-stabilizing member.

In some embodiments, a generally planar pleat-stabilizing member may comprise a netting or mesh (e.g., a two-dimensional network of filaments) that extends at least generally in the pleat direction of the pleated filter and that is bonded to multiple pleat tips thereof, but is not bonded to the pleat walls. An exemplary pleat-stabilizing member 37 of this general type is depicted in Fig. 7. In this exemplary embodiment, member 37 not only has portions (e.g., filaments) that extend substantially in the pleat direction, but also has portions that extend in a direction substantially perpendicular thereto. Also, in this exemplary embodiment, member 37 is bonded to downstream pleat tips 14 but is not bonded to downstream pleat walls 16 or 17. In various embodiments, member 37 may or may not be bonded to frame 24. And in additional various embodiments, a member 37 may or may not be provided on an upstream side of the pleated filter as well as on a downstream side. Such a netting or mesh may be comprised of any material whose filaments collectively provide sufficient tensile strength to meet the above definition of a pleat-stabilizing member. In specific embodiments, such a netting or mesh may comprise an expanded-metal mesh.

In some embodiments, a pleat-stabilizing member may comprise a metal netting or metal mesh that extends at least generally in the pleat direction of the pleated filter and that is bonded to multiple pleat tips thereof, and is also bonded to substantially all of the surfaces of the pleat walls (so that the pleat-stabilizing member may e.g. generally follow the contours of the pleated filter). A portion of such an exemplary pleat-stabilizing member 39 of this general type is depicted in Fig. 8. In this exemplary embodiment, member 39 not only has portions (e.g., filaments) that extend substantially in the pleat direction, but also has portions that extend in a direction substantially perpendicular thereto. Also, in this exemplary embodiment, member 39 is bonded to downstream pleat tips 14 and is also bonded to substantially all of surface 22 of downstream pleat walls 16 and 17. In various embodiments, member 39 may or may not be bonded to frame 24. And in additional various embodiments, a member 39 may or may not be provided on an upstream side of the pleated filter as well as on a downstream side.

By definition, a support layer of the type disclosed earlier herein, e.g. a low-gsm polymer scrim that is bonded to the non-woven electret fibrous web over substantially all of the nominal area of the web and that is pleated along with the web, is not a pleat-stabilizing member. That is, even though such a support layer, when bonded to the web prior to pleating, might impart increased stiffness so as to enhance the ability of the media to be pleated, it will not provide the above-specified deformation resistance under air pressure (it is noted however that such a layer might achieve such deformation resistance when provided as a generally planar layer that is bonded generally only to the pleat tips e.g. in the manner of Fig. 7 rather than being pleated along with the web). It will be appreciated that such materials as e.g. metal meshes and metal nettings of the general type described above with reference to Fig. 8, may provide such deformation resistance, even if they are pleated along with the non-woven electret fibrous web.

The present disclosure is also directed to methods of using the non-woven fibrous webs of the present disclosure in a variety of applications. Thus, in yet another aspect, the disclosure relates to articles comprising any of the non-woven fibrous webs described above prepared according to any of the foregoing methods. In certain embodiments, the non-woven electret fibrous webs of any of the foregoing embodiments may be used to make a gas filtration article comprising a gas-impermeable housing at least partially surrounding the non-woven electret fibrous web, the housing comprising at least one gas inlet in fluid communication with a first major surface of the non-woven electret fibrous web, and at least one gas outlet in fluid communication with a second major surface of the non-woven electret fibrous web opposite the first major surface of the non-woven electret fibrous web.

It is understood that a variety of gas filtration articles can be made from various non-woven electret fibrous webs containing sorbent particles, which are preferably granulated activated carbon particles. Gas (e.g. air) filtration media, furnace filters, respirators, and the like can be beneficially manufactured to include non-woven electret fibrous webs containing sorbent particles, e.g. granulated activated carbon particles. In exemplary embodiments as mentioned, additional layers (e.g., upper and/or lower support layers) may be included by providing additional overlaid or underlaid webs. Such a gas filtration article may take a variety of shapes and forms. A further aspect provides a method of filtering a gas, the method comprising contacting a gas filtration article with a permeating gas. In certain embodiments, the gas filtration article comprises a pleated non-woven electret fibrous and a plurality of sorbent particles (e.g. granular activated carbon particles) entrapped in the web. In specific embodiments, framed pleated filters as disclosed herein may find use in any situation in which it is desired to remove particulate and/or gaseous or vaporous materials from moving air. In particular embodiments, such framed filters may be used in forced air heating/cooling systems (i.e., HVAC systems), room-air purifiers, cabin-air filters for automobiles, filters for vacuum cleaners, and so on. In some embodiments, a framed pleated air filter comprising the herein-disclosed non-woven electret fibrous web, can be provided with an informational indicia to indicate the upstream and downstream sides of the framed filter (if such sides are specified). In various embodiments, such an informational indicia may comprise a printed arrow, a written description, a pictorial representation, or any other suitable e.g. printed, embossed, etc. indicia which can communicate the desired information.

This application refers to PCT application No. PCT/US2012/044279 (entitled Non-Woven Electret Fibrous Webs and Methods of Making Same, filed 27 June 2012 under attorney docket number 68223WO002) and U.S. Provisional Application No. 61/503363 (entitled Patterned Air-laid Nonwoven Electret Fibrous Webs and Methods of Making and Using Same, filed 30 June 2011 under attorney docket number 67764US002). It is noted however that in the event that there is any conflict or discrepancy between the specification of this application as written and the disclosure in these or in any other document referred to herein, the specification of this application as written will control.

The present specification further describes subject-matter, as set forth in the following statements 1-23.

Statement 1. A pleated air filter comprising: a pleated, non-woven electret fibrous web comprising a random, intermingled mixture of discrete electret fibers, discrete multicomponent bonding fibers, and sorbent particles, wherein the pleated, non-woven electret fibrous web comprises at least one pleat-stabilizing member that is arranged on a downstream or upstream side of the pleated air filter and that extends across multiple pleat tips of the pleated air filter.

Statement 2. The pleated air filter of Statement 1 wherein the at least one pleat-stabilizing member is chosen from the group consisting of: at least one continuous strand of solidified adhesive that extends at least generally in a pleat direction of the pleated air filter, that is bonded to at least some pleat tips of the pleated air filter, and that contacts and is bonded to at least portions of pleat walls of the pleated air filter; at least one elongated, generally planar strip that extends at least generally in the pleat direction of the pleated air filter, that is bonded to at least some pleat tips of the pleated air filter, and that does not contact and is not bonded to, any substantial portion of pleat walls of the pleated air filter; at least one generally planar member that is integrally connected to a perimeter frame that is arranged around at least a portion of a perimeter edge of the pleated air filter, which generally planar member is interspersed with through-passages that allow air flow therethrough; a generally planar netting or mesh that extends at least generally in the pleat direction of the pleated air filter, that is bonded to at least some pleat tips of the pleated air filter, and that does not contact and is not bonded to, any substantial portion of pleat walls of the pleated air filter; and, a metal netting or metal mesh that extends at least generally in the pleat direction of the pleated air filter, that is bonded to at least some pleat tips of the pleated air filter, and that contacts and is bonded to at least portions of pleat walls of the pleated air filter.

Statement 3. The pleated air filter of any of Statements 1-2 wherein the sorbent particles comprise granular activated carbon particles.

Statement 4. The pleated air filter of Statement 3 wherein the granular activated carbon particles comprise a mesh size chosen from 12x20, 20x40, 25x45, 30x60, 40x70, and mixtures of particles of any or all of these mesh sizes.

Statement 5. The pleated air filter of any of Statements 1-4 wherein the electret fibers comprise an average length of from about 2 to about 6 mm and wherein the multicomponent bonding fibers comprise an average length of from about 2 to about 6 mm.

Statement 6. The pleated air filter of Statement 5 wherein a ratio of the average length of the multicomponent fibers to the average length of the electret fibers, is from about 3:4 to about 4:3.

Statement 7. The pleated air filter of any of Statements 1-6 wherein the pleated, non-woven electret fibrous web is a calendered web.

Statement 8. The pleated air filter of any of Statements 1-7 wherein the pleated, non-woven electret fibrous web comprises a solidity of from about 20 % to about 28 %.

Statement 9. The pleated air filter of any of Statements 1-8 wherein a weight ratio of the multicomponent fibers to the sorbent particles is from about 6 % to about 13 % and wherein a weight ratio of the multicomponent fibers to the total weight of the components of the web is from about 4 % to about 10 %.

Statement 10. The pleated air filter of any of Statements 1-9 wherein the pleated air filter is a framed air filter that comprises a perimeter frame arranged around at least a portion of a perimeter edge of the pleated air filter.

Statement 11. The pleated air filter of any of Statements 1-10 further comprising at least one support layer that is bonded to a major surface of the non-woven electret fibrous web and is pleated therewith, wherein the support layer is a non-woven fibrous web with a basis weight of less than about 150 grams per square meter.

Statement 12. The pleated air filter of any of Statements 1-11 wherein the sorbent particles comprise a chemically active material.

Statement 13. A process for preparing a pleated air filter comprising a pleated, non-woven electret fibrous web comprising a random, intermingled mixture of discrete electret fibers, discrete multicomponent bonding fibers, and sorbent particles, the process comprising the steps of: feeding the electret fibers, the multicomponent bonding fibers, and the sorbent particles into an upper end of a forming chamber, transporting the electret fibers, the multicomponent bonding fibers, and the sorbent particles to a lower end of the forming chamber, collecting the electret fibers, the multicomponent bonding fibers, and the sorbent particles on a first support layer as a random, intermingled mixture of particles and fibers, transporting the first support layer bearing the random, intermingled mixture of particles and fibers thereon away from the forming chamber, placing a second support layer atop the random, intermingled mixture of particles and fibers, exposing the random, intermingled mixture of particles and fibers to a temperature sufficient to at least partially melt first regions of the multicomponent bonding fibers, so that the multicomponent fibers thermally bond at least to each other and to fibers of the first and second support layers sufficiently to transform the random, intermingled mixture of particles and fibers, and the first and second support layers, into a self-supporting filter media comprising a non-woven electret fibrous web with first and second support layers thermally bonded to major surfaces thereof, pleating the self-supporting filter media, and, arranging at least one pleat-stabilizing member on an upstream or downstream side of the pleated self-supporting filter media.

Statement 14. The process of Statement 13 further comprising bonding at least a portion of the at least one pleat-stabilizing member to a portion of the pleated self-supporting filter media.

Statement 15. The process of any of Statements 13-14 wherein the exposing of the random, intermingled mixture of particles and fibers to a temperature sufficient to at least partially melt first regions of the multicomponent bonding fibers comprises at least a calendering step.

Statement 16. The process of Statement 15 wherein the exposing the random, intermingled mixture of particles and fibers to a temperature sufficient to at least partially melt first regions of the multicomponent bonding fibers comprises an initial step of autogenously bonding at least some of the multicomponent bonding fibers of the random, intermingled mixture of particles and fibers, and a final step that is a calendering step.

Statement 17. The process of any of Statements 13-16 wherein the pleating is performed with a blade pleater.

Statement 18. The process of any of Statements 13-17 further comprising forming the pleated self-supporting filter media into a shape and arranging a perimeter frame around perimeter edges of the shaped filter media and attaching the perimeter frame to the filter media to form a framed air filter.

Statement 19. The process of any of Statements 13-18 wherein the forming chamber contains rotating rollers, at least some of which rollers comprise a plurality of spikes protruding therefrom.

Statement 20. The process of any of Statements 13-19 wherein the transporting of the electret fibers, the multicomponent bonding fibers, and the sorbent particles from the upper end of the forming chamber to the lower end of the forming chamber is motivated at least in part by gravity.

Statement 21. The process of Statement 20 wherein the collecting of the electret fibers, the multicomponent bonding fibers, and the sorbent particles on a first support layer as a random, intermingled mixture, is assisted by a vacuum applied to an underside of the first support layer.

Statement 22. The process of any of Statements 13-21 wherein the first support layer is provided on a collector that is an endless moving belt.

Statement 23. The pleated air filter of any of Statements 1-12, made by the process of any of Statements 13-22.

Various exemplary embodiments of non-woven electret fibrous webs have been described above and are further illustrated below by way of the following Examples.

*Examples*

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

**Working Example Set B**

**Materials**

The raw materials used in the following preparative examples, examples and comparative examples are all commercially available, as described in detail below in Table B-1.

**Table B-1**

| Example | Trade Designation | Supplier | Material Type | Properties |
|---|---|---|---|---|
| B1 (Lot C) | T255 | Trevira GmbH (Bobingen-Germany) | Bicomponent Fibers Core: Polyethylene terephthalate (PET) Sheath: Modified Polyethylene (PE) | Decitex: 6.7 Length: 3 mm |
| B1 (Lot C) | FILTRETE™ | 3M Company (Breda, The Netherlands) | Polypropylene (PP) Charged Electret Fibers | Cut length: 3 mm |
| B1 (Lot C) | GAC - CTC60 | Donau Carbon GmbH (Frankfurt, Germany) | Granulated Activated Carbon | 30x60 mesh |

(continued)

| Example | Trade Designation | Supplier | Material Type | Properties |
|---|---|---|---|---|
| B1 (Lot C) | Pegatex | PEGAS Non-wovens SRO (Znojmo, Czech Republic) | Spunbond Polypropylene Fibers (PP) | Basis Weight: 10 gsm |
| B2, B3 & B4 (Lot E, F & H) | T255 | Trevira GmbH (Bobingen-Germany) | Bicomponent Fibers Core: Polyethylene terephthalate (PET) Sheath: Modified Polyethylene (PE) | Decitex: 6.7 Length: 4 mm |
| B2, B3 & B4 (Lot E, F & H) | FILTRETE™ | 3M Company (Breda, The Netherlands) | Polypropylene (PP) Charged Electret Fibers | Cut length: 3 mm |
| B2, B3 & B4 (Lot E, F & H) | GAC - CTC60 | Donau Carbon GmbH (Frankfurt, Germany) | Granulated Activated Carbon | 30x60 mesh |
| B2, B3 & B4 (Lot E, F & H) | Pegatex | PEGAS Non-wovens SRO (Znojmo, Czech Republic) | Spunbond Polypropylene Fibers (PP) | Basis Weight: 10 gsm |
| B5, B6 & B7 (Lot M,O & P) | FILTRETE™ | 3M Company (Breda, The Netherlands) | Polypropylene (PP) Charged Electret Fibers | Cut length: 3 mm |
| B5, B6 & B7 (Lot M,O & P) | GAC - CTC60 | Donau Carbon GmbH (Frankfurt, Germany) | Granulated Activated Carbon | 30x60 mesh |
| B5, B6 & B7 (Lot M,O & P) | Pegatex | PEGAS Non-wovens SRO (Znojmo, Czech Republic) | Spunbond Polypropylene Fibers (PP) | Basis Weight: 10 gsm |

**Test Methods**

Basis Weight Measurement

The basis weight for exemplary non-woven electret fibrous webs containing granulated activated carbon and electret fibers was measured with a weighing scale Mettler Toledo XS4002S, (commercially available from Mettler-Toledo SAS, Viroflay, France).

Thickness Measurement

The thickness of the flat filter media was measured using a MITUTOYO Caliper Model ID-C1050B (commercially available from Mitutoyo, Paris, France)

Pressure Drop, Particulate Capture Efficiency and Loading Performance

Pressure drop, fractional efficiency and loading performance of pleated and framed filters were measured in a vertical duct system. DIN 71 460 part 1 is used as a guideline.
Main test equipment: Particle Counter APS Model 3400A (commercially available from TSI, Inc., Shoreview, MN), Aerosol Generator: Palas Brush Generator RGB 1000 SEA fine loading (commercially available from Palas GmbH, Karlsruhe, Germany). The pleated and framed filters were believed to have a nominal size of 21 x 24 cm with a pleat height of approximately 30 mm, or in some cases a nominal size of 19 x 19 cm with a pleat height of approximately 22 mm.

Air Permeability

The air permeability of the various webs has been measured using a TEXTEST FX3000 Air Permeability Tester III (commercially available from TEXTEST AG, Schwerzenbach, Switzerland).

Odor Filter Performance: Gas And Vapor Performance Test (Adsorption Efficiency)

Pleated filters were tested for the odor filter capability. The gas and vapor efficiency is determined with DIN 71-460-2 as a guideline. Specific filter challenges used were: n-butane, sulfur dioxide ($SO_2$) and toluene. The test equipment used was a Model ML9850 Gas Analyzer for $SO_2$ (commercially available from Teledyne Monitor Labs, Inc., Englewood, CO), and a Model FID 2010T chromatograph for n-butane and toluene (commercially available from Testa GmbH, Munich, Germany).

**Preparation of Pleated Air-laid Non-woven Electret Fibrous Webs Including Granulated Activated Carbon**

In each of the following Examples, a SPIKE air-laying (specifically, gravity-laying) forming apparatus (commercially available from FormFiber NV, Denmark) was used to prepare non-woven electret fibrous webs containing a plurality of discrete fibers and a plurality of particles. Details of the SPIKE apparatus and methods of using the SPIKE apparatus in forming air-laid webs is described in U.S. Patent Nos. 7,491,354 and 6,808,664, and in U.S. Patent Application Publication No. 2011/0247839.

Preparation of the Bicomponent Fibers

The performance of the filter material is considerably affected by the presence of lubricants and anti-static agents (collectively known as a "spin finish") on the surface of the fibres. In practise, polymer fibres produced commercially have spin finishes, and thus it is necessary to substantially remove lubricants and anti-static agents from the fibres before blending of said fibres.

The bicomponent fibers as received from the vendor were washed free of any spin finish by 3 successive immersions in cold water. The washed fibers were squeezed to remove excess water between each immersion. The washed fibers were then been dried with blown air to remove completely any remaining water. This drying process was applied to each type of fiber.

Preparation of electret (Filtrete™) Fibers

The Filtrete fibers were cut to length by MiniFibers, Inc. (Johnson City, TN) and then opened using blown air to produce opened (de-clumped) individual fibers.

Pleating of the Non-woven Electret Fibrous Web

The pleating process was performed on a JCEM Pleater Model P-CNC, P2-Generation (commercially-available from JCEM GmbH, Fulenbach, Switzerland) using the following parameters:

Pleating speed: 30 - 150 pleats per minute
Gap Blades/Plates: 0.5 mm to 1.6mm
Soft touch: 0.8 to 1.2
Temperature: 150°C
Teflon Tape: Both blades wrapped
Pressure Shoes: 2.0 bar to 4.0 bar

Example B1 (Lot C) -Air-laid Non-woven Electret Fibrous Web

The electret fibers and the washed bicomponent fibers were fed into a split pre-opening and blending chamber with two rotating spike rollers with a conveyor belt having a width of 0.6 m at a velocity 0.74 m/min.

The washed bicomponent fibers (6.7dtex by 3 mm) were fed to the chamber on the conveyor belt with a mass flowrate of 22.2g/min. The electret fibers were fed to the chamber on the conveyor belt with a mass flowrate of 22.2 g/min. The granulated activated carbon (GAC) was fed on the top belt from the SPIKE equipment at 480 g/min.

Thereafter, the blend was fed into the top of the forming chamber having a blower having a flow rate of 2300 $m^3$/hour and set up at 100% of its nominal capacity with the same conveyor belt.

The fibrous materials were opened and fluffed in the top of the chamber and then fell through the upper rows of spike rollers and endless belt screen to the bottom of the forming chamber passing thereby the lower rows of spike rollers and again same the endless belt screen. The fibers were pulled down on a porous endless belt/wire by a combination of gravity and vacuum applied to the forming chamber from the lower end of the porous forming belt/wire.

A support layer of the type Pegatex 10 gsm (lower support layer) was fed into the forming chamber on the top surface of the endless forming belt/wire running at the lower end of the forming chamber moving at a speed of 1.5 m/min. The materials were collected on the conveying belt thereby forming a three-dimensional non-woven electret fibrous web containing the GAC particles supported by the support layer underneath.

The web was then conveyed into a gas oven (150°C) with a line speed of 1.5 m/min, which melts the sheath of the bicomponent fibers. The oven was a gas-fired oven (commercially-available from SANTEX group, Tobel, Switzerland). The oven has two heating chamber with a total of 4 meters in length; the principle is air blowing in the chamber from the top and the bottom. The circulation can be set so that a part of the blown air can be evacuated (20 to 100% setup) and a part can be re-circulated (20 - 100% setup). In this example the air was evacuated at 80% setting and re-circulated at 20%, the temperature was 150°C in the chamber. The resulting web was a flexible web and was visually observed to have GAC particles homogenously distributed within the obtained three-dimensional web.

This resulting web was then calendered with an additional top layer (upper support layer) of the same Pegatex 10 gsm spunbond nonwoven fibrous web. The calender was running at 1.5 m/min with both steel cylinders heated at 150°C and adjusted to have a gap between cylinders of 1.25 mm. The calender was a two steel roll calender engineered and manufactured by Energy Solutions International, Inc. (St Paul, MN). The total web weight was 560 g/m$^2$ and thickness was 1.8 mm. The average permeability was ranging from 800 L/m$^2$/s to 900 L/m$^2$/s. This medium was not pleatable with the JCEM pleater within the above-referenced pleating parameter range. It will however be appreciated that, as guided by the teachings herein, the use of e.g. stiffer upper and lower support layers would be expected by the skilled artisan to result in a web of the B1 composition (of multicomponent fibers, electret fibers, and sorbent particles) being satisfactorily pleatable.

Example B2 (Lot E) - Air-laid Non-woven Electret Fibrous Web

In a like manner to Example B1, the washed bicomponent fibers (6.7dtex by 4 mm) were fed with a mass flowrate of 43.5g/min to the chamber onto this conveyor belt running at a velocity of 0.68m/min. The electret fibers were fed with a mass flowrate of 43.5g/min to this chamber onto this conveyor belt at the same speed. The GAC was fed on the top belt from the SPIKE equipment at 432g/min. All other settings were identical to Example B1 except the following:

> The medium was calendered 2 times using the following parameters: gap of 1.15 mm at a speed of 1 m/min, then gap of 1 mm at a speed of 0.5 m/min.

Resulting web was 536 g/m$^2$ with an average thickness of 1.6 mm. The average permeability was ranging from 550 L/m$^2$/s to 700 L/m$^2$/s. This medium was stiff enough to be pleated on the JCEM pleater delivering a constant pleatpack.

On the pleated filter the pressure drop measured @ 200 [m3/hr] was 131 Pascal. Fractional efficiency: (SAE fine 0.5-1 micrometer) was 82.8%.

Example B3 (Lot F) - Air-laid Non-woven Electret Fibrous Web

In a like manner to Example B1, the washed bicomponent fibers were fed with a mass flowrate of 20.5 g/min to this chamber onto this conveyor belt running at a velocity of 0.68m/min. The electret fibers were fed with a mass flowrate of 43.5 g/min to this chamber onto this conveyor belt at the same speed. The GAC was fed on the top belt from the SPIKE equipment at 432 g/min. All other settings were identical to Example B1 except the following:

> The medium was then placed in the oven at 1 m/min and then calendered with a gap of 0.85 mm at a speed of 1 m/min.

Resulting web was 472 g/m$^2$ with an average thickness of 1.3 mm. The average permeability ranged from 700 L/m$^2$/s to 750 L/m$^2$/s. This medium was less stiff than Lot F but still delivering a constant pleatpack on the JCEM pleater.

On the pleated filter the pressure drop measured @ 200 [m3/hr] was 91 Pascal. Fractional efficiency: (SAE fine 0.5-1 micrometer) was a 58.1%. The Gas and Vapor Performance Test (Adsorption Efficiency) for butane (5 min.) was 58.9%. The Gas and Vapor Performance Test (Adsorption Efficiency) for SO$_2$ (5 min.) was 56.1%

Example B4 (Lot H) - Air-laid Non-woven Electret Fibrous Web

In a like manner to Example B1, the washed bicomponent fibers were fed with a mass flowrate of 43.5 g/min to this chamber onto this conveyor belt running at a velocity of 0.68 m/min. The electret fibers were fed with a mass flowrate of 43.5g/min to this chamber onto this conveyor belt at the same speed. The GAC was fed on the top belt from the SPIKE equipment at 432 g/min. All other settings were identical to Example B1 except the following:

The medium was then placed in the oven at 1 m/min and then calendered with a gap of 1.1 mm at a speed of 1 m/min. The resulting web was 553 g/m$^2$ with an average thickness of 1.5 mm. The average permeability was around 780 L/m$^2$/s. This medium was relatively soft (more than lot E &F) but could still be pleated on the JCEM pleater.

On the pleated filter the pressure drop measured @ 200 [m$^3$/hr] was 59.6 Pascal. Fractional efficiency: (SAE fine 0.5-1 micrometer) was 87.9%. The Gas and <u>Vapor</u> Performance Test (Adsorption Efficiency) for butane (5 min.) was 53.6%. The Gas and <u>Vapor</u> Performance Test (Adsorption Efficiency) for $SO_2$ (5 min.) was 41.1%. The Gas and Vapor Performance Test (Adsorption Efficiency) for Toluene (5 min) was 91.9%

Example B5 (Lot M) - Air-laid Non-woven Electret Fibrous Web

In a like manner to Example B1, the washed bicomponent fibers (9 dtex by 3 mm) were fed with a mass flowrate of 24.5 g/min to this chamber onto this conveyor belt running at a velocity of 0.68 m/min. The electret fibers were fed with a mass flowrate of 43.5 g/min to this chamber onto this conveyor belt at the same speed. The GAC was fed on the top belt from the SPIKE equipment at 432 g/min. All other settings were identical to Example B1 except the following:

The medium was then placed in the oven at 1 m/min and then calendered with a gap of 1.1 mm at a speed of 1 m/min. Resulting web was 508 g/m$^2$ with an average thickness of 1.8 mm. The average permeability was around 900 L/m$^2$/s. This medium was very soft (more than lot H) but could still be pleated on the JCEM pleater. Testing revealed a tendency to pleat collapse at 600 m$^3$/hour.

Example B6 (Lot O) - Air-laid Non-woven Electret Fibrous Web

In a like manner to Example B1, the washed bicomponent fibers (9 dtex by 3 mm) were fed with a mass flowrate of 24.5 g/min to this chamber onto this conveyor belt running at a velocity of 0.68 m/min. The electret fibers were fed with a mass flowrate of 40.8 g/min to this chamber onto this conveyor belt at the same speed. The GAC was fed on the top belt from the SPIKE equipment at 432 g/min. All other settings were identical to Example B1 except the following:

The medium was then placed in the oven at 1 m/min and then calendered with a gap of 1.1 mm at a speed of 1m/min. Resulting web was 507 g/m$^2$ with an average thickness of 1.8 mm. The average permeability was around 845 L/m$^2$/s. This medium was stiff enough to be pleated on the JCEM pleater (better than lot M), delivering a constant pleatpack.

On the pleated filter the pressure drop measured @ 200 [m$^3$/hr] was 45.2 Pascal. Fractional efficiency: (SAE fine 0.5-1 micrometer) was 84.0%. The Gas and Vapor Performance Test (Adsorption Efficiency) for butane (5 min) was 31.7%. The Gas and Vapor Performance Test (Adsorption Efficiency)for $SO_2$ (5 min.) was 45.5%. The Gas and Vapor Performance Test (Adsorption Efficiency) for Toluene (5 min.) was 91.9%.

Example B7 (Lot P) - Air-laid Non-woven Electret Fibrous Web

In a like manner to Example B1, the washed bicomponent fibers (9 dtex by 3 mm) were fed with a mass flowrate of 24.5 g/min to this chamber onto this conveyor belt running at a velocity of 0.68 m/min. The electret fibers were fed with a mass flowrate of 40.8 g/min to this chamber onto this conveyor belt at the same speed. The GAC was lowered for this trial. It was fed on the top belt from the SPIKE equipment at 384 g/min. All other settings were identical to Example B1 except the following:

The medium was then placed in the oven at 1 m/min and then calendered with a gap of 0.9 mm at a speed of 1 m/min. Resulting web was 349 g/m$^2$ with an average thickness of 1.6 mm. The average permeability was around 845 l/m$^2$/s. This medium was soft but still pleatable on the JCEM pleater.

On the pleated filter the pressure drop measured @ 200 [m$^3$/hr] was 44.1 Pascal. Fractional efficiency: (SAE fine 0.5-1 micrometer) was 80.8%. The Gas and Vapor Performance Test (Adsorption Efficiency) for butane (5 min) was 24.5%. The Gas and Vapor Performance Test (Adsorption Efficiency) for $SO_2$ (5 min.) was 36.1%.

**Working Example Set A**

An additional set of pleated non-woven electret fibrous webs were produced in generally similar manner to Example Set B, with details as noted below and with similarities and differences from Example Set B highlighted as needed.

**Test Methods**

Solidity

Solidity is a dimensionless fraction which is usually reported in percentage, and denotes the proportion of the total volume of a fibrous web that is occupied by the solid materials (e.g. fibers and particles) of the web, disregarding any internal porosity of the particles. Solidity may be determined by dividing the actual, measured mass per volume (i.e., bulk density) of a fibrous web by the expected (theoretical) mass per volume collectively contributed by each of the components of the solid materials of the web. The actual bulk density of a web can be determined by first measuring the weight (e.g. of a 135 mm diameter circular sample of the web). Dividing the measured weight of the web by the web area provides the basis weight of the web, which is reported in $g/m^2$. Thickness of the web can then be measured e.g. by centering an approximately 140 g weight of approximately 100 mm diameter atop the 135 mm diameter web sample web and measuring the web thickness under those standardized conditions. The actual bulk density of the web can then be determined by dividing the basis weight of the web by the thickness of the web and is reported as $g/m^3$.

The solidity may then be determined by dividing the above experimentally obtained, actual bulk density of the web, by an aggregate (theoretical) density that takes into account the amounts of the various components (e.g. the polymer fibers and the particles) that make up the solid material of the web, and the inherent densities of those components. For the fibers, the density to be used is the inherent density of the individual fibers (e.g. for polypropylene fibers, the density may often be approximately 0.9 g/cc). For sorbent particles such as granular activated carbon, any internal porosity of the particles, as well the (in)ability of multiple particles to be packed together, may be disregarded. That is, the proper density to be used will be the inherent density of single particles (that is, the mass of a particle divided by the volume generally defined by the outermost surfaces of the particle, which density may be e.g. in the range of 0.7 - 1.0 g/cc), rather than the actual density of the carbon that provides the skeleton of each particle, and rather than the nominal packing density of the particles as a collection.

% Penetration and Pressure Drop

Percent penetration and pressure drop of a flat web sample are determined using a challenge aerosol containing NaCl (sodium chloride) particles, delivered (unless otherwise indicated) at a flow rate of 60 liters/min to provide a face velocity of 20 cm/s, and evaluated using a TSI™ Model 8130 high-speed automated filter tester (commercially available from TSI Inc.). For NaCl testing, the Automated Filter Tester may be operated with the heater on and the particle neutralizer on. Calibrated photometers may be employed at the filter inlet and outlet to measure the particle concentration and the % particle penetration through the filter. A pressure transducer in the filter tester may be employed to measure pressure drop (ΔP, mm H2O) through the filter.

Media Toluene Efficiency Measurement

Media toluene removal efficiency was determined using a 3.25 inch diameter (0.00535 m2) exposed circle of flat filter media. 245 liters/minute (lpm) of air humidified to 50% relative humidity and containing 10 parts per million by volume toluene was passed through the filter media. Filters were tested as-is, that is, without a conditioning step. An M4001 FTIR spectrometer (available from Midac Corporation, Irvine, CA) equipped with a liquid nitrogen cooled MCT detector and a gas cell approximately 10 meters in path length was used to measure downstream toluene concentration. Single-pass toluene efficiency was calculated as:

$$\text{Efficiency} = [1 - [\text{downstream toluene peak height}] / [(10 \text{ ppm toluene peak height}) - (\text{zero ppm}$$

$$\text{toluene peak height})]] \times 100\%.$$

Example A1

A non-woven electret fibrous web was formed on a gravity-laying (Spike) forming apparatus in generally similar manner to the procedures described in Example Set B. The web contained granular activated carbon, electret staple fibers, and multicomponent (specifically, bicomponent) staple fibers, and comprised scrims (support layer) on the top and bottom faces of the overall construction. The bicomponent fibers had been washed to remove any spin-finish which may have been present, and the electret fibers and the bicomponent fibers had been cut to approximately 3 mm average length. The mass percentages and composition of the A1 web are shown in Table A-1.

Table A-1

| Material Type | Description | Basis weight, gsm |
|---|---|---|
| Granular activated carbon | Kuraray Chemical Company; coconut-based, 20x40 mesh, 60 CTC activation, water-washed | 200 |
| Electrostatically charged fiber | 3M Company, Breda, Netherlands; polypropylene, ~ 3 mm length Filtrete | 37 |
| Bi-component fiber | 9 denier, super-washed, 3 mm | 24 |
| Scrim (top and bottom) | Pegas Pegatex polypropylene spunbond | 10 ea. |
| **Total (nominal) estimated basis weight** | | 281 |

A first layer of the spunbond scrim was provided on the endless belt collector of the forming apparatus, so as to become a lower support layer of the finished construction. After the fibers and particles had been deposited on the lower support layer and had exited the forming chamber, the lower support layer with the collected fibers and particles thereon was run through an oven (set at 150°C) in generally similar manner to that described in Example Set B. After this, a second layer of the spunbond scrim was placed atop the deposited mixture of fibers and particles (to form an upper support layer of the finished construction), after which the entire stack was run through a heated calender (i.e., a set of two metal rolls) set at 150°C, again in generally similar manner to that described in Example Set B.

Actual measured properties of the resulting A1 flat web (with the support layers in place, before pleating) are shown in Table A-2.

Table A-2

| Property | Value | Units |
|---|---|---|
| Pressure drop at 20 cm/s | 19.5 | Pa |
| % penetration NaCl at 20 cm/s | 68.6 | % |
| Basis weight | 269 | gsm |
| Thickness | 1.4 | mm |
| Solidity | 24 | % |

The web was pleated using a folding-style blade pleater in generally similar manner to the procedure described in Example Set B. The web was pleated at room temperature and was then subjected to a heat-stabilizing step in which the pleated web was held at a temperature in the range of approximately 65 - 80 °C for a desired time. The pleat height was approximately 19 mm, and the pleat spacing was approximately 10 mm. After pleating, a highly-open, generally flat wire mesh (an expanded-steel netting with a strand thickness of approximately 0.025 mm and a strand width of approximately 0.053 mm, comprising generally diamond-shaped openings with a long-way distance of approximately 52 mm and a short-way distance of approximately 19 mm, available from Wallner Tooling Expac, Rancho Cucamonga, CA) was attached to the pleat tips on both major faces of the pleated filter by way of a pressure-sensitive adhesive (available from 3M Company, St. Paul MN, under the trade designation SUPER 77) that had been spray coated onto the filter-media-facing surfaces of each wire mesh), to serve as downstream and upstream pleat-stabilizing members. As stabilized in this manner, the stability of the pleated media was sufficient for the pleats to hold their shape without deforming in the filter at idle condition and under typical airflow conditions. A U-shaped channel frame was attached to all four sides of the pleated filter, resulting in a nominal filter outer dimension of 51 x64 cm (20x25"). The filter was subjected to the ASHRAE 52.2 test method to determine the pressure drop and efficiency at a face velocity of 1.5 m/s; the results are shown in Table A-5. Several such webs were made, pleated, framed and tested.

Example A2

Another set of calendered, pleated non-woven electret fibrous webs were produced in similar manner to Example A1. The web contained granular activated carbon, electrostatically charged (electret) staple fibers, multicomponent (specifically, bicomponent) staple fibers, and a scrim (support layer) on the top and bottom faces of the overall construction. The bicomponent fibers were not washed (rather, they were believed to have been washed by the supplier); the electret fibers and the bicomponent fibers had been chopped to approximately 3 mm average length. The mass percentages and composition of the A2 web are shown in Table A-3.

Table A-3

| Material Type | Description | Basis weight, gsm |
|---|---|---|
| Granular activated carbon | Kuraray Chemical Company; coconut-based, 20x40 mesh, 60 CTC activation, water-washed | 200 |
| Electrostatically charged fiber | 3M Company, Breda, Netherlands; polypropylene, 3 mm length Filtrete | 54 |
| Bi-component fiber | Wellman, low melt, 10 denier, 3mm, not washed (believed to be washed as-received) | 25 |
| Scrim (top and bottom) | Mogul MOPET polyester spunbond | 17 ea. |
| **Total nominal (estimated) basis weight** | | 313 |

A first layer of the spunbond scrim was provided on the endless belt collector of the forming apparatus, so as to become a lower support layer of the finished construction. After the fibers and particles had been deposited on the lower support layer and had exited the forming chamber, a second layer of the spunbond scrim was placed atop the deposited fibers and particles, after which the entire stack was first run through an oven (set at 150°C) in generally similar manner to that described in Example Set B and was then run through a heated calender (i.e., a set of two metal rolls) set at 150°C, again in generally similar manner to that described in Example Set B.

Actual measured properties of the resulting A2 flat web (with the support layers in place, before pleating) are shown in Table A-4.

Table A-4

| Property | Value | Units |
|---|---|---|
| Pressure drop at 20 cm/s | 16.8 | Pa |
| % penetration NaCl at 20 cm/s | 59.2 | % |
| Basis weight | 314 | gsm |
| Thickness | 1.7 | mm |
| Solidity | 22 | % |

The web was pleated and framed in similar manner to Example A1, with downstream and upstream pleat-stabilizing members (wire meshes) being used as in Example A1. The filter was subjected to the ASHRAE 52.2 test method to determine the pressure drop and efficiency at a face velocity of 1.5 m/s; the results are shown in Table A-5. Several such framed pleated filters were made and tested.

Table A-5

| Measurement | Units | A1 | A2 |
|---|---|---|---|
| Initial pressure drop | cm H2O | 0.65 | 0.67 |
| Final pressure drop | cm H2O | 1.27 | 1.27 |
| Initial E1 efficiency (0.3-1.0 $\mu$m) | % | 25.3 | 38.9 |
| Initial E2 efficiency (1.0-3.0 $\mu$m) | % | 63.1 | 73.7 |
| Initial E3 efficiency (3.0-10 $\mu$m) | % | 82.2 | 88.3 |
| Minimum E1 efficiency (0.3-1.0 $\mu$m) | % | 25.3 | 38.2 |
| Minimum E2 efficiency (1.0-3.0 $\mu$m) | % | 63.1 | 73.7 |
| Minimum E3 efficiency (3.0-10 $\mu$m) | % | 82.2 | 88.3 |
| Arrestance | % | 93.4 | 90.5 |
| Dust holding capacity | grams | 12.8 | 14.3 |
| Minimum efficiency reporting value | MERV | 8 | 11 |

The filter efficiency results from Table A-5 indicate that the pleated filters have a low pressure drop (i.e. less than about 0.81 cm of water initial pressure drop), and that they have a high particulate removal efficiency (i.e. an E1 minimum efficiency of greater than 10% and/or an E3 minimum efficiency of greater than 70%). Additionally, two samples of the A2 media (in flat, unpleated configuration) were tested for their ability to remove toluene vapors from an airstream. An airstream containing 10 ppmv toluene vapor and 50% relative humidity was passed through the flat media at a velocity of 0.76 m/s (150 fpm). The average initial removal efficiency was 45%, signifying substantial removal of the toluene vapor.

**Claims**

1. A pleated air filter comprising:

   a pleated, non-woven electret fibrous web comprising a random, intermingled mixture of discrete electret fibers, discrete multicomponent bonding fibers, and sorbent particles,

   wherein the pleated, non-woven electret fibrous web comprises at least one pleat-stabilizing member that is arranged on a downstream or upstream side of the pleated air filter and that extends across multiple pleat tips of the pleated air filter,
   and wherein the pleated, non-woven electret fibrous web is a calendered web that comprises a solidity of from 20 % to 28 %.

2. The pleated air filter of claim 1 wherein the fibrous web comprises a first and a second support layer.

3. The pleated air filter of claim 1 or claim 2, wherein the at least one pleat-stabilizing member is chosen from the group consisting of:

   at least one continuous strand of solidified adhesive that extends at least generally in a pleat direction of the pleated air filter, that is bonded to at least some pleat tips of the pleated air filter, and that contacts and is bonded to at least portions of pleat walls of the pleated air filter;
   at least one elongated, generally planar strip that extends at least generally in the pleat direction of the pleated air filter, that is bonded to at least some pleat tips of the pleated air filter, and that does not contact and is not bonded to, any substantial portion of pleat walls of the pleated air filter;
   at least one generally planar member that is integrally connected to a perimeter frame that is arranged around at least a portion of a perimeter edge of the pleated air filter, which generally planar member is interspersed with through-passages that allow air flow therethrough;
   a generally planar netting or mesh that extends at least generally in the pleat direction of the pleated air filter, that is bonded to at least some pleat tips of the pleated air filter, and that does not contact and is not bonded to, any substantial portion of pleat walls of the pleated air filter;
   and,
   a metal netting or metal mesh that extends at least generally in the pleat direction of the pleated air filter, that is bonded to at least some pleat tips of the pleated air filter, and that contacts and is bonded to at least portions of pleat walls of the pleated air filter.

4. The pleated air filter of any of the preceding claims wherein the sorbent particles comprise granular activated carbon particles.

5. The pleated air filter of any of the preceding claims wherein the electret fibers comprise an average length of from about 2 to about 6 mm and wherein the multicomponent bonding fibers comprise an average length of from about 2 to about 6 mm.

6. The pleated air filter of claim 5 wherein a ratio of the average length of the multicomponent fibers to the average length of the electret fibers, is from about 3:4 to about 4:3.

7. The pleated air filter any of the preceding claims wherein the pleated air filter is a framed air filter that comprises a perimeter frame arranged around at least a portion of a perimeter edge of the pleated air filter.

8. A process for preparing a pleated air filter as specified in the preceding claims, which process comprises the preparation of a non-woven electret fibrous web, comprising the steps of subjecting the electret fibers, the multi-component fibers, and the plurality of sorbent particles to the following process steps to form a non-woven electret fibrous web: opening, mixing, delivering to a feeding device, then gravity-laying or air-laying the mixed and delivered fibers and particles in a forming chamber to form a collection of intermingled fibers and particles, bonding of at least

EP 2 931 402 B1

the multicomponent fibers of the collected fibers and particles, calendering and pleating the web that is formed and arranging at least one pleat-stabilizing member on an upstream or downstream side of the pleated web.

9. A process for preparing a pleated air filter according to claim 8, wherein the pleated air filter is as specified in claim 2, the process comprising the steps of:

feeding the electret fibers, the multicomponent bonding fibers, and the sorbent particles into an upper end of a forming chamber,
transporting the electret fibers, the multicomponent bonding fibers, and the sorbent particles to a lower end of the forming chamber,
collecting the electret fibers, the multicomponent bonding fibers, and the sorbent particles on a first support layer as a random, intermingled mixture of particles and fibers,
transporting the first support layer bearing the random, intermingled mixture of particles and fibers thereon away from the forming chamber,
placing a second support layer atop the random, intermingled mixture of particles and fibers,
exposing the random, intermingled mixture of particles and fibers to a temperature sufficient to at least partially melt first regions of the multicomponent bonding fibers, so that the multicomponent fibers thermally bond at least to each other and to fibers of the first and second support layers sufficiently to transform the random, intermingled mixture of particles and fibers by at least a calendering step, and the first and second support layers, into a self-supporting filter media comprising a non-woven electret fibrous web with first and second support layers thermally bonded to major surfaces thereof,
pleating the self-supporting filter media,
and,
arranging at least one pleat-stabilizing member on an upstream or downstream side of the pleated self-supporting filter media.

10. The process of claim 9 further comprising bonding at least a portion of the at least one pleat-stabilizing member to a portion of the pleated self-supporting filter media.

11. The process of claim 9 wherein the exposing the random, intermingled mixture of particles and fibers to a temperature sufficient to at least partially melt first regions of the multicomponent bonding fibers comprises an initial step of autogenously bonding at least some of the multicomponent bonding fibers of the random, intermingled mixture of particles and fibers, and a final step that is a calendering step.

12. The process of claim 9 wherein the transporting of the electret fibers, the multicomponent bonding fibers, and the sorbent particles from the upper end of the forming chamber to the lower end of the forming chamber is motivated at least in part by gravity.

13. The process of claim 12 wherein the collecting of the electret fibers, the multicomponent bonding fibers, and the sorbent particles on a first support layer as a random, intermingled mixture, is assisted by a vacuum applied to an underside of the first support layer.


**Patentansprüche**

1. Plissierter Luftfilter, umfassend:

Plissiertes Elektret-Fasergewebe aus Textilverbundstoff, eine zufällige, verwirbelte Mischung von einzelnen Elektret-Fasern, einzelnen gebundenen Mehrkomponentenfasern und Sorptionsteilchen,
wobei das plissierte Elektret-Fasergewebe aus Textilverbundstoff mindestens ein plissierstabilisierendes Element umfasst, das auf einer nach unten oder nach oben weisenden Seite des plissierten Luftfilters angeordnet ist und sich über mehrere Faltenspitzen des plissierten Luftfilters erstreckt,
und wobei das plissierte Elektret-Fasergewebe aus Textilverbundstoff ein kalandriertes Gewebe mit einer Festigkeit von 20 % bis 28 % ist.

2. Plissierter Luftfilter nach Anspruch 1, wobei das Fasergewebe eine erste und eine zweite Stützschicht aufweist.

3. Plissierter Luftfilter nach Anspruch 1 oder Anspruch 2, wobei mindestens ein plissierstabilisierendes Element ausgewählt ist aus der Gruppe bestehend aus:

mindestens einem durchgängigen Faden erstarrten Klebers, der sich zumindest im Allgemeinen in einer Faltenrichtung des plissierten Luftfilters erstreckt, an mindestens ein paar Faltenspitzen des plissierten Luftfilters haftet und mindestens Abschnitte der Faltenwände des plissierten Luftfilters berührt und an diesen haftet;

mindestens einem länglichen, im Allgemeinen ebenflächigen Streifen, der sich zumindest im Allgemeinen in der Faltenrichtung des plissierten Luftfilters erstreckt, der an mindestens ein paar Faltenspitzen des plissierten Luftfilters haftet und der die wesentlichen Abschnitte der Faltenwände des plissierten Luftfilters nicht berührt und nicht an diesen haftet;

mindestens einem im Allgemeinen ebenflächigen Element, das vollständig mit einem Umfangsrahmen verbunden ist, der um mindestens einen Abschnitt einer Umfangskante des plissierten Filters herum angeordnet ist, bei dem das ebenflächige Element im Allgemeinen mit Durchlässen durchsetzt ist, durch die eine Luftströmung erfolgen kann;

einem im Allgemeinen ebenflächigen Netz oder Geflecht, das sich zumindest im Allgemeinen in der Faltenrichtung des plissierten Luftfilters erstreckt und an mindestens ein paar Faltenspitzen des plissierten Luftfilters haftet und die wesentlichen Abschnitte der Faltenwände des plissierten Luftfilters nicht berührt und nicht an diesen haftet; und

einem Metallnetz oder Metallgeflecht, das sich zumindest im Allgemeinen in der Faltenrichtung des plissierten Luftfilters erstreckt, an mindestens ein paar Faltenspitzen des plissierten Luftfilters haftet und mindestens Abschnitte der Faltenwände des plissierten Luftfilters berührt und an diesen haftet;

4. Plissierter Luftfilter nach einem der vorstehenden Ansprüche, wobei die Sorptionsteilchen Aktivkohleteilchen in Granulatform umfassen.

5. Plissierter Luftfilter nach einem der vorstehenden Ansprüche, wobei die Elektret-Fasern eine durchschnittliche Länge von ca. 2 bis ca. 6 mm umfassen und wobei die gebundenen Mehrkomponentenfasern eine durchschnittliche Länge von ca. 2 bis ca. 6 mm umfassen.

6. Plissierter Luftfilter nach Anspruch 5, wobei ein Verhältnis der durchschnittlichen Länge der Mehrkomponentenfasern zur durchschnittlichen Länge der Elektret-Fasern ca. 3:4 bis ca. 4:3 beträgt.

7. Plissierter Luftfilter nach einem der vorstehenden Ansprüche, wobei der plissierte Luftfilter ein gerahmter Luftfilter ist, der einen Umfangsrahmen umfasst, der um mindestens einen Abschnitt der Umfangskante des plissierten Luftfilters herum angeordnet ist.

8. Vorgang zur Vorbereitung eines plissierten Luftfilters wie in den vorstehenden Ansprüchen angegeben, die Vorbereitung eines Elektret-Fasergewebes aus Textilverbundstoff umfassend, wobei dies umfasst, dass folgende Vorgangsstufen bei den Elektret-Fasern, den Mehrkomponentenfasern und der Mehrzahl der Sorptionsteilchen angewendet werden, um ein Elektret-Fasergewebe aus Textilverbundstoff zu bilden: Öffnen, Mischen, Zuführen an eine Zuführungseinrichtung, anschließende Schwere- oder Luftverlagerung der gemischten und zugeführten Fasern und Teilchen in eine Formkammer, um eine Ansammlung von gemischten Fasern und Teilchen zu bilden, Anhaften von mindestens den Mehrkomponentenfasern der angesammelten Fasern und Teilchen, Kalandrieren und Plissieren des sich bildenden Gewebes und Anordnen von mindestens einem plissierstabilisierenden Element auf einer nach oben oder nach unten weisenden Seite des plissierten Gewebes.

9. Vorgang zur Vorbereitung eines plissierten Luftfilters nach Anspruch 8, wobei der plissierte Luftfilter wie in Anspruch 2 angegeben ist und wobei der Vorgang folgende Schritte umfasst:

Zuführen der Elektret-Fasern, der gebundenen Mehrkomponentenfasern und der Sorptionsteilchen in das obere Ende einer Formkammer,

Transportieren der Elektret-Fasern, der gebundenen Mehrkomponentenfasern und der Sorptionsteilchen in das untere Ende der Formkammer,

Aufsammeln der Elektret-Fasern, der gebundenen Mehrkomponentenfasern und der Sorptionsteilchen an einer ersten Stützschicht als zufällige, verwirbelte Mischung aus Teilchen und Fasern,

Transportieren der ersten Stützschicht, auf der sich die zufällige, verwirbelte Mischung aus Teilchen und Fasern befindet, von der Formkammer weg,

Positionieren einer zweiten Stützschicht oberhalb der zufälligen, verwirbelten Mischung aus Teilchen und Fasern,

einer Temperatur Aussetzen der zufälligen, verwirbelten Mischung aus Teilchen und Fasern bei, die ausreicht, um die ersten Bereiche der gebundenen Mehrkomponentenfasern mindestens teilweise zu schmelzen, sodass die gebundenen Mehrkomponentenfasern mindestens miteinander und mit den Fasern der ersten und zweiten Stützschicht thermisch verklebt werden, was ausreicht, um die zufällige, verwirbelte Mischung aus Teilchen und Fasern um mindestens eine Kalandrierstufe umzuformen, und

die erste und zweite Stützschicht in ein selbsttragendes Filtermedium umzuformen, das ein Elektret-Fasergewebe aus Textilverbundstoff mit ersten und zweiten Stützschichten umfasst, die mit der Hauptflächen davon thermisch verklebt sind,

Plissieren des selbsttragenden Filtermediums,

und

Anordnen von mindestens einem der plissierstabilisierenden Elemente an einer nach oben oder unten weisenden Seite des plissierten selbsttragenden Filtermediums.

10. Vorgang nach Anspruch 9, ferner das Anheften von mindestens einem Abschnitt von mindestens einem plissierstabilisierenden Element an einen Abschnitt des plissierten selbsttragenden Filtermediums umfassend.

11. Vorgang nach Anspruch 9, wobei das einer Temperatur Aussetzen der zufälligen, verwirbelten Mischung aus Teilchen und Fasern, die ausreicht, um die ersten Bereiche der gebundenen Mehrkomponentenfasern mindestens teilweise zu schmelzen, einen ersten Schritt der Eigenanhaftung von mindestens einigen der gebundenen Mehrkomponentenfasern der zufälligen, verwirbelten Mischung aus Teilchen und einen letzten Schritt des Kalandrieren umfasst.

12. Vorgang nach Anspruch 9, wobei das Transportieren der Elektret-Fasern, der gebundenen Mehrkomponentenfasern und der Sorptionsteilchen vom oberen Ende der Formkammer zum unteren Ende der Formkammer zumindest teilweise durch die Schwerkraft veranlasst wird.

13. Vorgang nach Anspruch 12, wobei das Aufsammeln der Elektret-Fasern, der gebundenen Mehrkomponentenfasern und der Sorptionsteilchen an einer ersten Stützschicht als zufällige, verwirbelte Mischung durch ein Vakuum unterstützt wird, das an der Unterseite der ersten Stützschicht angewendet wird.

## Revendications

1. Filtre à air plissé, comprenant :

une toile fibreuse plissée, non tissée en électret, comprenant un mélange aléatoire enchevêtré de fibres discrètes en électret, de fibres de liaison à composants multiples et de particules de sorbant,

dans lequel la toile fibreuse plissée, non tissée en électret comprend au moins un élément de stabilisation des plis qui est agencé sur un côté en aval ou en amont du filtre à air plissé et qui s'étend au-dessus de multiples sommets des plis du filtre à air plissé,

et dans lequel la toile fibreuse plissée, non tissée en électret est une toile calandrée qui présente une solidité de 20 % à 28 %.

2. Filtre à air plissé selon la revendication 1, la toile fibreuse comprenant une première et une deuxième couche support.

3. Filtre à air plissé selon la revendication 1 ou la revendication 2, dans lequel ledit au moins un élément de stabilisation des plis est choisi dans le groupe constitué par :

au moins un brin continu d'adhésif solidifié qui s'étend au moins généralement dans une direction des plis du filtre à air plissé, qui est lié à au moins quelques sommets des plis du filtre à air plissé et qui est en contact avec et lié à au moins des parties de parois des plis du filtre à air plissé ;

au moins une bande allongée, généralement plane, qui s'étend au moins pour l'essentiel dans la direction des plis du filtre à air plissé, qui est liée à au moins quelques sommets des plis du filtre à air plissé et qui n'est, ni en contact avec, ni liée à, une quelconque partie substantielle des parois des plis du filtre à air plissé ;

au moins un élément généralement plan qui est relié d'un seul tenant à un cadre périmétrique qui est agencé autour d'au moins une partie d'un bord périmétrique du filtre à air plissé, lequel élément pour l'essentiel plan est parsemé par des passages traversants qui permettent un flux d'air à travers eux ;

une nappe ou un filet pour l'essentiel plan(e), qui s'étend au moins pour l'essentiel dans la direction des plis du filtre à air plissé, qui est lié(e) à au moins quelques sommets des plis du filtre à air plissé et qui n'est, ni en contact avec, ni lié(e), à une quelconque partie substantielle des parois des plis du filtre à air plissé ; et,

une nappe métallique ou un filet métallique qui s'étend au moins généralement dans la direction des plis du filtre à air plissé, qui est lié(e) à au moins quelques sommets des plis du filtre à air plissé et qui est en contact avec et lié(e) à au moins des parties de parois des plis du filtre à air plissé.

**4.** Filtre à air plissé selon l'une quelconque des revendications précédentes, dans lequel les particules de sorbant comprennent des particules de charbon actif granulaire.

**5.** Filtre à air plissé selon l'une quelconque des revendications précédentes, dans lequel les fibres en électret présentent une longueur moyenne d'environ 2 à environ 6 mm et dans lequel les fibres de liaison à composants multiples présentent une longueur moyenne d'environ 2 à environ 6 mm.

**6.** Filtre à air plissé selon la revendication 5, dans lequel un rapport de la longueur moyenne des fibres à composants multiples à la longueur moyenne des fibres en électret est d'environ 3:4 à environ 4:3.

**7.** Filtre à air plissé selon l'une quelconque des revendications précédentes, où le filtre à air plissé est un filtre à air à cadre qui comprend un cadre périmétrique agencé autour d'au moins une partie d'un bord périmétrique du filtre à air plissé.

**8.** Procédé pour préparer un filtre à air plissé tel que spécifié dans les revendications précédentes, lequel procédé comprend la préparation d'une toile fibreuse non tissée en électret, comprenant les étapes consistant à soumettre les fibres en électret, les fibres à composants multiples et la pluralité de particules de sorbant aux étapes de procédé suivantes pour former une toile fibreuse non tissée en électret : ouvrir, mélanger, introduire dans un dispositif d'alimentation, puis coucher par gravité ou par air les fibres et les particules mélangées et introduites dans une chambre de formage pour former une collection de fibres et de particules enchevêtrées, lier au moins les fibres à composants multiples des fibres et des particules collectées, calandrer et plisser la toile qui est formée et agencer au moins un élément de stabilisation des plis sur un côté en amont ou en aval de la toile plissée.

**9.** Procédé pour préparer un filtre à air plissé selon la revendication 8, dans lequel le filtre à air plissé est tel que spécifié dans la revendication 2, le procédé comprenant les étapes consistant à :

introduire les fibres en électret, les fibres de liaison à composants multiples et les particules de sorbant dans une extrémité supérieure d'une chambre de formage,
transporter les fibres en électret, les fibres de liaison à composants multiples et les particules de sorbant vers une extrémité inférieure de la chambre de formage,
collecter les fibres en électret, les fibres de liaison à composants multiples et les particules de sorbant sur une première couche support sous forme d'un mélange aléatoire, enchevêtré de particules et de fibres,
transporter la première couche support portant le mélange aléatoire enchevêtré de particules et de fibres loin de la chambre de formage,
placer une deuxième couche support sur le mélange aléatoire, enchevêtré de particules et de fibres,
exposer le mélange aléatoire, enchevêtré de particules et de fibres à une température suffisante pour faire fondre au moins partiellement des premières régions des fibres de liaison à composants multiples de sorte que les fibres à composants multiples se lient thermiquement au moins les unes aux autres et aux fibres de la première et de la deuxième couche support suffisamment pour transformer le mélange aléatoire, enchevêtré de particules et de fibres, par au moins une étape de calandrage, et
la première et la deuxième couche support en un support de filtre autoporteur comprenant une toile fibreuse non tissée en électret, présentant la première et la deuxième couche support liées thermiquement aux surfaces principales correspondantes,
plisser le support de filtre autoporteur
et,
agencer au moins un élément de stabilisation des plis sur un côté en amont ou en aval du support de filtre autoporteur plissé.

**10.** Procédé selon la revendication 9, comprenant en outre la liaison d'au moins une partie dudit au moins un élément de stabilisation des plis à une partie du support de filtre autoporteur plissé.

**11.** Procédé selon la revendication 9, dans lequel l'exposition du mélange aléatoire, enchevêtré de particules et de fibres à une température suffisante pour faire fondre au moins partiellement des premières régions des fibres de liaison à composants multiples comprend une étape initiale de liaison autogène d'au moins quelques-unes des fibres de liaison à composants multiples du mélange aléatoire, enchevêtré de particules et de fibres, et une étape finale qui est une étape de calandrage.

**12.** Procédé selon la revendication 9, dans lequel le transport des fibres en électret, des fibres de liaison à composants multiples et des particules de sorbant de l'extrémité supérieure de la chambre de formage vers l'extrémité inférieure de la chambre de formage est dû au moins en partie à la gravité.

**13.** Procédé selon la revendication 12, dans lequel la collecte des fibres en électret, des fibres de liaison à composants multiples et des particules de sorbant sur une première couche support sous forme de mélange aléatoire, enchevêtré est assistée par un vide appliqué au côté inférieur de la première couche support.

**Fig. 1**

**Fig. 2**

**Fig. 3**

**Fig. 4**

**Fig. 5**

**Fig. 6**

**Fig. 7**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201200638 A2
- US 3802817 A
- US 4215682 A
- US 5641555 A
- US 5643507 A
- US 5658640 A
- US 5658641 A
- US 6420024 B
- US 6645618 B
- US 6849329 B
- US 7691168 B
- US 6969484 B
- US 7695660 B
- US 6057256 A
- US 5486410 A
- US 5662728 A

- US 5972808 A
- US 4552603 A
- US 20110247839 A
- US 4798575 A
- US 4976677 A
- US 5389175 A
- US 6521011 B
- US 6126707 A
- US 7503953 B
- US 7235115 B
- US 7896940 B
- US 2012044279 W
- US 61503363 A
- US 7491354 B
- US 6808664 B